(19) Europäisches Patentamt / European Patent Office / Office européen des brevets

(11) **EP 1 995 857 B1**

(12) # FASCICULE DE BREVET EUROPEEN

(45) Date de publication et mention
de la délivrance du brevet:
**18.11.2009 Bulletin 2009/47**

(51) Int Cl.:
**H02M 1/15** *(2006.01)* **B60L 9/22** *(2006.01)*

(21) Numéro de dépôt: **08103849.9**

(22) Date de dépôt: **07.05.2008**

(54) **Procédé de commande à réponse pile d'un onduleur triphasé avec un filter RLC, support d'enregistrement pour ce procédé et véhicule ferroviaire**

Verfahren zur Hysterese-Steuerung eines mit einem RLC-Filter verbundenen dreiphasigen Wechselrichters, Speichermedium für dieses Verfahren und Schienenfahrzeug

Deadbeat control method for a three-phase inverter with an RLC filter, storage means for said method and railway vehicle

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **25.05.2007 FR 0703719**

(43) Date de publication de la demande:
**26.11.2008 Bulletin 2008/48**

(73) Titulaire: **ALSTOM Transport SA**
**92300 Levallois-Perret (FR)**

(72) Inventeur: **Alacoque, Jean**
**69360 Communay (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**JP-A- 60 059 904 JP-A- 2005 318 683**

- **TAKAO KAWABATA ET AL: "DEAD BEAT CONTROL OF THREE PHASE PWM INVERTER" IEEE TRANSACTIONS ON POWER ELECTRONICS, IEEE SERVICE CENTER, PISCATAWAY, NJ, US, vol. 5, no. 1, janvier 1990 (1990-01), pages 21-28, XP000103609 ISSN: 0885-8993**
- **KOJIMA M ET AL: "NOVEL VECTOR CONTROL SYSTEM USING DEADBEAT-CONTROLLED PWM INVERTER WITH OUTPUT LC FILTER" IEEE TRANSACTIONS ON INDUSTRY APPLICATIONS, IEEE SERVICE CENTER, PISCATAWAY, NJ, US, vol. 40, no. 1, janvier 2004 (2004-01), pages 162-169, XP001226166 ISSN: 0093-9994**

**Description**

La présente invention concerne un procédé de régulation d'une tension ou d'un courant d'un filtre RLC, un support d'enregistrement et des véhicules pour ce procédé.

Plus précisément, le déposant connaît des procédés de régulation d'une tension $U_c$ entre un premier et un second points de sortie d'un filtre RLC passe-bas de période propre $T_f$, ce filtre RLC comportant deux points d'entrée électriquement raccordés, respectivement, aux conducteurs d'un bus DC d'un véhicule électrique alimenté par l'intermédiaire d'une caténaire, le premier et le second points de sortie étant électriquement raccordés à un convertisseur électrique commandable permettant de commander le couple exercé par un moteur électrique de traction du véhicule électrique, la constante de temps statorique $\tau$ de ce moteur étant strictement inférieure à la période propre $T_f$.

Ces procédés de régulation comportent la mesure ou l'estimation de l'intensité $I_{li}$ d'un courant de ligne $I_l$ traversant l'inductance du filtre à un instant $t_i$, de la tension $U_{ci}$ entre les points de sortie du filtre à l'instant $t_i$, et d'une tension de ligne $U_l$ entre les points d'entrée du filtre.

Les documents antérieurs JP-A-60 059904 et JP-A-2005 318683 montrent des procédés de régulation d'un courant de ligne $I_l$ traversant une inductance L d'un filtre RLC passe-bas de période propre $T_f$, ce filtre comportant :

- deux points d'entrée électriquement raccordés respectivement aux conducteurs d'un bus DC d'un véhicule électrique alimenté par une caténaire, et
- des premier et second points de sortie, le premier et le second points de sortie étant électriquement raccordés à un convertisseur électrique commandable pour faire varier le couple d'un moteur électrique de traction du véhicule électrique, la constante de temps statorique $\tau$ de ce moteur électrique étant strictement inférieure à la période propre $T_f$.

Ces procédés comportent la mesure ou l'estimation de l'intensité $I_{li}$ du courant de ligne $I_l$ à un instant $t_i$, d'une tension $U_{ci}$ entre les points de sortie du filtre à l'instant $t_i$ et d'une tension de ligne $U_l$ entre les points d'entrée du filtre.

Ici, par le terme « caténaire », on désigne aussi bien une ligne aérienne sur laquelle frotte un pantographe pour alimenter le véhicule électrique qu'un rail posé au sol sur lequel frotte un frotteur pour alimenter un véhicule électrique. Ce rail posé au sol est plus connu sous le terme de « troisième rail ».

La constante de temps statorique $\tau$ d'un moteur électrique est définie par la relation suivante :

$$\tau = \frac{L_m}{R_m}$$

où :

- $L_m$ est l'inductance statorique du moteur électrique, et
- $R_m$ est la résistance statorique du moteur électrique.

Cette constante de temps est typiquement comprise entre 4 ms et 200 ms pour les moteurs électriques de traction d'un véhicule électrique.

On définit la période propre $T_f$ du filtre RLC par la formule suivante :

$$T_f = 2\pi\sqrt{LC}$$

Cette période propre $T_f$ doit être strictement supérieure à la constante de temps $\tau$ du moteur, sinon le filtre RLC ne peut pas remplir sa fonction de filtre passe-bas par rapport à des variations rapides du courant consommé ou produit par le moteur. Le filtre RLC a aussi pour but de diminuer l'impédance de source, ou l'impédance de charge, vue par le convertisseur.

On définit ici, le temps de mise en vitesse du moteur électrique comme étant le temps nécessaire pour faire varier sa vitesse d'une fraction significative, par exemple 1/1000, de sa vitesse maximum avec son couple maximum.

Dans les procédés connus, la régulation fait intervenir une boucle de rétroaction pour établir la différence entre une consigne de tension $U_{cc}$ entre les points de sortie du filtre ou une consigne de courant de ligne $I_{lc}$ et une valeur mesurée. Ces procédés fonctionnent correctement mais ne permettent pas de réagir assez rapidement à de brusques variations de la tension de ligne $U_l$ ou du couple résistant du moteur. Par exemple, ces brusques variations de la tension

de ligne $U_l$ ou du couple résistant peuvent se produire :

- en cas de décollement du pantographe de la caténaire, c'est-à-dire lorsque le pantographe perd le contact mécanique et électrique avec la caténaire,
- en cas de recollement du pantographe à la caténaire, c'est-à-dire lorsque le pantographe rétablit le contact mécanique et électrique avec la caténaire, ou
- en cas de perte de l'adhérence entre les roues motrices du véhicule électrique et le support de roulement.

L'invention vise à remédier à ces problèmes en proposant un procédé plus rapide de régulation de la tension $U_c$ ou du courant de ligne $I_l$.

Elle a donc pour objet un procédé de régulation à réponse pile de la tension $U_c$ dans lequel, le procédé comporte :

- le calcul d'une consigne de courant $\overline{I}_{uc}$ pour l'intensité moyenne $I_u$ d'un courant continu $I_u$ traversant le premier point de sortie du filtre entre l'instant $t_i$ et un instant $t_{i+1}$, cette consigne $\overline{I}_{uc}$ étant établie à partir des équations d'états discrétisées du filtre de manière à ce que la tension $U_c$ soit égale à une consigne de tension prédéterminée $U_{cc}$ à l'instant $t_{i+1}$, ces équations d'états discrétisées reliant entre elles les intensités $I_{li}$, $I_{l,i+1}$ du courant II de ligne respectivement aux instants $t_i$ et $t_{i+1}$, les tensions $U_{ci}$ et $U_{c,i+1}$ entre les points de sortie du filtre respectivement aux instants $t_i$ et $t_{i+1}$, la tension moyenne de ligne $\overline{U}_1$ entre les instants $t_i$ et $t_{i+1}$ et l'intensité moyenne $I_u$,
- la commande du convertisseur électrique pour produire un courant $I_u$ traversant le point de sortie du filtre dont l'intensité moyenne $\overline{I}_u$ entre les instants $t_i$ et $t_{i+1}$ est égale à la consigne de courant $\overline{I}_{ue}$, l'intervalle T de temps entre les instants $t_i$ et $t_{i+1}$ étant strictement inférieur à $5\tau$.

L'invention a également pour objet un procédé de régulation à réponse pile de l'intensité du courant de ligne $I_l$ dans lequel le procédé comporte :

- le calcul d'une consigne de courant $\overline{I}_{uc}$ pour l'intensité moyenne $\overline{I}_u$ d'un courant continu $I_u$ traversant le premier point de sortie du filtre entre l'instant $t_j$ et un instant $t_{i+1}$, cette consigne $\overline{I}_{uc}$ étant établie à partir des équations d'états discrétisées du filtre de manière à ce que la tension $U_c$ soit égale à une consigne de tension prédéterminée $U_{cc}$ à l'instant $t_{i+1}$, ces équations d'états discrétisées reliant entre elles les intensités $I_{li}$, $I_{l,i+1}$ du courant $I_l$ de ligne respectivement aux instants $t_i$ et $t_{i+1}$, les tensions $U_{ci}$ et $U_{c,i+1}$ entre les points de sortie du filtre respectivement aux instants $t_i$ et $t_{i+1}$, la tension moyenne de ligne $\overline{U}_1$ entre les instants $t_i$ et $t_{i+1}$ et l'intensité moyenne $\overline{I}_u$,
- la commande du convertisseur électrique pour produire un courant $I_u$ traversant le point de sortie du filtre dont l'intensité moyenne $\overline{I}_u$ entre les instants $t_i$ et $t_{i+1}$ est égale à la consigne $\overline{I}_{uc}$, l'intervalle T de temps entre les instants $t_i$ et $t_{i+1}$ étant strictement inférieur à $5\tau$.

Les procédés de régulation à réponse pile sont plus connus sous le terme anglais de « Deadbeat Control ». Ces procédés permettent d'atteindre, dès le prochain instant de régulation $t_{i+1}$, la consigne. A cet effet, ces procédés ne mettent pas en oeuvre de boucle de rétroaction.

Plus précisément, dans les procédés de régulation à réponse pile ci-dessus, la consigne d'intensité moyenne $\overline{I}_{ue}$ est déterminée à partir des équations d'états discrétisées du filtre RLC sans utiliser de boucle de rétroaction. Ces procédés permettent donc de garantir que la tension $U_c$ ou le courant de ligne $I_l$ a atteint sa consigne exactement à la fin de l'intervalle T. De plus, puisque l'intervalle T est ici choisi petit, c'est-à-dire inférieur à cinq fois la constante de temps $\tau$ du moteur, ces procédés réagissent beaucoup plus rapidement que des procédés de régulation implémentant une boucle de rétroaction. Dans ces conditions, les surtensions de la tension de ligne $U_l$ ou les surintensités du courant de ligne $I_l$ sont limitées beaucoup plus efficacement en particulier en cas de décollement ou recollement du pantographe, ou en cas de perte d'adhérence.

On remarquera également que les ajustements de l'intensité moyenne $\overline{I}_u$ se font à des intervalles T inférieurs à $5\tau$. Les intervalles T sont donc très inférieurs au temps de mise en vitesse du moteur électrique du fait de l'inertie du véhicule électrique ramenée à l'arbre du moteur et à l'inertie du rotor du moteur électrique lui-même, de sorte qu'ils ne sont pas ressentis par le conducteur ou les passagers de ce véhicule. Ils ne perturbent donc pas non plus le procédé de commande du couple du moteur électrique.

Les modes de réalisation du procédé de régulation de la tension $U_c$ peuvent comporter une ou plusieurs des caractéristiques suivantes :

- la consigne de tension $U_{cc}$ est choisie systématiquement inférieure ou égale à une limite de tension $U_{cmax}$, la limite de tension $U_{cmax}$ correspondant à la tension maximale admissible à l'entrée du convertisseur électrique ou entre les points de sortie du filtre ;
- la construction d'une estimation $I_{lp}$ du courant de ligne $I_l$ qui sera atteint si la tension $U_c$ est égale à la consigne de tension $U_{cc}$ à l'instant $t_{i+1}$,

- la comparaison de l'estimation $I_{lp}$ à au moins une limite prédéterminée de courant de ligne $I_{lm}$,
- uniquement si la limite prédéterminée de courant de ligne $I_{lm}$ est franchie, la modification de la consigne de tension $U_{cc}$ de manière à obtenir une consigne de tension temporaire $U_{ccm}$ qui correspond à une estimation de courant de ligne $I_{lp}$ qui ne franchit pas la limite prédéterminée de courant de ligne $I_{lm}$, et l'utilisation de la consigne de tension temporaire $U_{ccm}$ en lieu et place de la consigne de tension $U_{cc}$ lors du calcul de la consigne de courant moyen $\overline{I}_{uc}$ uniquement pour l'intervalle T en cours, et
- si la limite prédéterminée $I_{lm}$ n'est pas franchie, l'utilisation de la consigne de tension $U_{cc}$ pour le calcul de la consigne de courant moyen $\overline{I}_{uc}$ pour l'intervalle T en cours ;

■ la consigne $\overline{I}_{uc}$ est une solution du système d'équations suivant :

$$I_{lp} - \mu_2 \cdot C \cdot U_{cc} = e^{\mu_1 \cdot T} \cdot \left(I_{li} - \mu_2 \cdot C \cdot U_{ci}\right) + a_1 \cdot \left(\mu_2 \cdot \overline{I}_{uc} + \frac{1}{L} \cdot \overline{U}_l\right)$$

$$I_{lp} - \mu_1 \cdot C \cdot U_{cc} = e^{\mu_2 \cdot T} \cdot \left(I_{li} - \mu_1 \cdot C \cdot U_{ci}\right) + a_2 \cdot \left(\mu_1 \cdot \overline{I}_{uc} + \frac{1}{L} \cdot \overline{U}_l\right)$$

où :

- R et L sont les valeurs, respectivement, de la résistance et de l'inductance du filtre RLC raccordées en série entre les premiers points d'entrée et de sortie,
- C est la capacité du condensateur raccordé entre les premier et second points de sortie,
- $\mu_1$ et $\mu_2$ sont les valeurs propres d'une matrice d'évolution définies par la relation suivante :

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ et $a_2$ sont les valeurs définies par les relations suivantes :

$$a_1 = \frac{e^{\mu_1 \cdot T} - 1}{\mu_1}$$

$$a_2 = \frac{e^{\mu_2 \cdot T} - 1}{\mu_2}$$

- la consigne de tension $U_{cc}$ est construite à partir de la tension de ligne $U_l$ de manière à ce que son spectre de puissance ne présente aucun harmonique au-delà de la fréquence $0,9/T_f$.

Les modes de réalisation du procédé de régulation de la tension $U_c$ présentent en outre les avantages suivants :

- maintenir la tension $U_c$ inférieure à la limite $U_{cmax}$ permet d'éviter des déclenchements intempestifs d'un dispositif de sécurité tel qu'un hacheur rhéostatique permettant d'écrêter toute surtension sur le bus DC,

- l'utilisation de la consigne temporaire de tension $U_{ccm}$ permet de maintenir l'intensité du courant de ligne $I_l$ dans une plage acceptable tout en limitant les variations de la tension $U_c$, et
- choisir une consigne de tension $U_{cc}$ de manière à ce que son spectre de puissance ne présente aucun harmonique au-delà de la fréquence $0,9/T_f$ permet à la fois d'éviter des oscillations du courant de ligne $I_l$ et de la tension du condensateur $U_c$ au voisinage de la fréquence propre du filtre et aussi de minimiser ainsi l'énergie de commande.

Les modes de réalisation du procédé de régulation de l'intensité du courant de ligne $I_l$ peuvent comporter une ou plusieurs des caractéristiques suivantes :

■ la consigne de courant de ligne $I_{lc}$ est choisie systématiquement inférieure ou égale à une limite $I_{lmax}$, la limite $I_{lmax}$ correspondant à l'intensité du courant de ligne $I_l$ à partir de laquelle un disjoncteur d'une sous-station d'alimentation de la caténaire ou un disjoncteur du véhicule est déclenché ;

■ la consigne de courant de ligne $I_{lc}$ est choisie systématiquement supérieure ou égale à une limite $I_{lmin}$, la limite $I_{lmin}$ correspondant à l'intensité du courant de ligne en deçà de laquelle l'inductance L du filtre est déssaturée ;

■ la construction d'une estimation $U_{cp}$ de la tension $U_c$ qui sera atteinte entre les points de sortie à l'instant $t_{i+1}$ si l'intensité du courant de ligne $I_l$ est égale à la consigne $I_{lc}$ à l'instant $t_{i+1}$,

- la comparaison de l'estimation de tension $U_{cp}$ à au moins une limite prédéterminée de tension $U_{cm}$,
- uniquement si la limite prédéterminée de tension $U_{cm}$ est franchie, la modification de la consigne de courant de ligne $I_{lc}$ de manière à obtenir une consigne temporaire de courant de ligne $I_{lcm}$ qui corresponde à une estimation $U_{cp}$ qui ne franchit pas la limite prédéterminée $U_{cm}$, et l'utilisation de la consigne temporaire de courant de ligne $I_{lcm}$ en lieu et place de la consigne de courant de ligne $I_{lc}$ lors de la commande du convertisseur uniquement pendant l'intervalle T en cours, et
- si la limite prédéterminée de tension $U_{cm}$ n'est pas franchie, l'utilisation de la consigne de courant de ligne $I_{lc}$ lors du calcul de la consigne de courant moyen $\overline{I}_{uc}$ pour l'intervalle T en cours ;

■ la consigne de courant moyen $\overline{I}_{uc}$ est une solution du système d'équations suivant :

$$I_{lc} - \mu_2 \cdot C \cdot U_{cp} = e^{\mu_1 \cdot T} \cdot \left(I_{li} - \mu_2 \cdot C \cdot U_{ci}\right) + a_1 \cdot \left(\mu_2 \cdot \overline{I}_{uc} + \frac{1}{L} \cdot \overline{U}_l\right)$$

$$I_{lc} - \mu_1 \cdot C \cdot U_{cp} = e^{\mu_2 \cdot T} \cdot \left(I_{li} - \mu_1 \cdot C \cdot U_{ci}\right) + a_2 \cdot \left(\mu_1 \cdot \overline{I}_{uc} + \frac{1}{L} \cdot \overline{U}_l\right)$$

où :

- R et L sont les valeurs, respectivement, de la résistance et de l'inductance du filtre RLC raccordées en série entre les premiers points d'entrée et de sortie,
- C est la capacité du condensateur raccordé entre les premier et second points de sortie,
- $\mu_1$ et $\mu_2$ sont les valeurs propres d'une matrice d'évolution définies par la relation suivante :

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ et $a_2$ sont les valeurs définies par les relations suivantes :

$$a_1 = \frac{e^{\mu_1 \cdot T} - 1}{\mu_1}$$

$$a_2 = \frac{e^{\mu_2 \cdot T} - 1}{\mu_2}$$

■ une première phase de régulation de la seule tension $U_c$ entre les premier et second points de sortie du filtre,

- une seconde phase de régulation du seul courant de ligne $I_l$,
- le passage de la première phase vers la seconde phase dès que le courant de ligne $I_l$ franchit une limite $I_{lm}$ et le passage de la seconde phase vers la première phase dès que le courant de ligne $I_l$ refranchit la même ou une autre limite en sens inverse.

Les modes de réalisation du procédé de régulation du courant de ligne $I_l$ présentent en outre les avantages suivants :

- choisir la consigne de courant de ligne $I_{lc}$ inférieure à la limite $I_{lmax}$ permet d'éviter systématiquement des déclenchements intempestifs du disjoncteur d'une sous-station, ou du disjoncteur de protection des équipements du véhicule lui-même,
- choisir la consigne de courant de ligne $I_{lc}$ systématiquement supérieure à la limite $I_{lmin}$ permet de conserver systématiquement l'inductance L saturée et donc de rester dans une zone de fonctionnement linéaire, ce qui évite que l'inductance L ne relâche brusquement une quantité importante d'énergie en se déssaturant,
- l'utilisation de la consigne temporaire de courant de ligne $I_{lcm}$ permet de toujours maintenir la tension $U_c$ dans une plage de fonctionnement acceptable tout en limitant les variations du courant de ligne $I_l$,
- alterner entre des phases de régulation de la tension $U_c$ seul et du courant de ligne $I_l$ seul permet de maintenir à la fois la tension $U_c$ et courant de ligne $I_l$ dans des plages de fonctionnement acceptables.

Les procédés de régulation de la tension $U_c$ ou du courant de ligne $I_l$ peuvent comporter une ou plusieurs des caractéristiques suivantes :

- le procédé comporte la commande d'un rhéostat pour produire en combinaison avec la commande du convertisseur, le courant $I_u$ traversant la première borne de sortie dont l'intensité moyenne $\overline{I}_u$ entre les instants $t_i$ et $t_{i+1}$ est égale à la consigne de courant $\overline{I}_{uc}$ ;
- l'intervalle T est inférieur ou égal à $\tau/5$.

Les modes de réalisation ci-dessus des procédés de régulation de la tension $U_c$ ou du courant de ligne $I_l$ présentent en outre les avantages suivants :

- l'utilisation du rhéostat pour produire le courant $I_u$ en plus du convertisseur permet de compenser plus rapidement une variation de la tension $U_c$ ou du courant de ligne Il que si seul le convertisseur était utilisé,
- choisir l'intervalle T inférieur ou égal à $\tau/5$ permet de limiter l'amplitude des variations du courant $I_u$, ce qui améliore les caractéristiques du procédé de régulation.

L'invention a également pour objet un support d'enregistrement d'informations comportant des instructions pour l'exécution de l'un quelconque des procédés de régulation ci-dessus, lorsque ces instructions sont exécutées par un calculateur électronique.
L'invention a également pour objet un véhicule électrique comportant :

- un bus DC formé de deux conducteurs,
- au moins un moteur de traction du véhicule électrique ayant une constante de temps statorique $\tau$,
- un convertisseur électrique commandable propre à faire varier le couple du moteur de traction,
- un filtre passe-bas RLC comportant deux points d'entrée électriquement raccordés, respectivement, aux deux conducteurs du bus DC et des premier et second points de sortie électriquement raccordés au convertisseur électrique,

- des capteurs ou des estimateurs propres à mesurer ou à estimer l'intensité $I_{li}$ d'un courant de ligne $I_l$ traversant l'inductance du filtre à l'instant $t_i$, une tension $U_{ci}$ entre les points de sortie du filtre à l'instant $t_i$, une tension de ligne $U_l$ entre les points d'entrée du filtre ;
- un calculateur d'une consigne de courant $\overline{I}_{uc}$ pour l'intensité moyenne $I_u$ d'un courant continu $I_u$ traversant le premier point de sortie du filtre entre l'instant $t_i$ et un instant $t_{i+1}$, cette consigne de courant $\overline{I}_{uc}$ étant établie à partir des équations d'états discrétisées du filtre de manière à ce que la tension $U_c$ soit égale à une consigne de tension prédéterminée $U_{cc}$ à l'instant $t_{i+1}$, ces équations d'états discrétisées reliant entre elles les intensités $I_{li}$, $I_{l,i+1}$ du courant $I_l$ de ligne respectivement aux instants $t_i$ et $t_{i+1}$, les tensions $U_{ci}$ et $U_{c,i+1}$ entre les points de sortie du filtre respectivement aux instants $t_i$ et $t_{i+1}$, la tension moyenne de ligne $\overline{I}_1$ entre les instants $t_i$ et $t_{i+1}$ et l'intensité moyenne $\overline{I}_u$,
- une unité de commande du convertisseur électrique pour produire un courant $I_u$ traversant le point de sortie du filtre dont l'intensité moyenne $\overline{I}_u$ entre les instants $t_i$ et $t_{i+1}$ est égale à la consigne de courant $\overline{I}_{uc}$, l'intervalle T de temps entre les instants $t_i$ et $t_{i+1}$ étant strictement inférieur à $5\tau$.

L'invention a également pour objet un autre véhicule électrique comportant :

- un calculateur d'une consigne de courant $\overline{I}_{uc}$ pour l'intensité moyenne $I_u$ d'un courant continu $I_u$ traversant le premier point de sortie du filtre entre l'instant $t_i$ et un instant $t_{i+1}$, cette consigne de courant $\overline{I}_{uc}$ étant établie à partir des équations d'états discrétisées du filtre de manière à ce que l'intensité du courant de ligne $I_l$ soit égale à une consigne de courant de ligne $I_{lc}$ prédéterminée à l'instant $t_{i+1}$, ces équations d'états discrétisées reliant entre elles les intensités $I_{li}$, $I_{l,i+1}$ du courant de ligne $I_l$, respectivement, aux instants $t_i$ et $t_{i+1}$, les tensions $U_{ci}$ et $U_{c,i+1}$ entre les points de sortie du filtre, respectivement, aux instants $t_i$ et $t_{i+1}$, la tension moyenne $\overline{U}_1$ de la ligne entre les instants $t_i$ et $t_{i+1}$ et l'intensité moyenne $\overline{I}_u$, et
- une unité de commande du convertisseur électrique pour produire un courant $I_u$ traversant le point de sortie du filtre dont l'intensité moyenne $\overline{I}_u$ entre les instants $t_i$ et $t_{i+1}$ est égale à la consigne de courant $\overline{I}_{ue}$, l'intervalle T de temps entre les instants $t_i$ et $t_{i+1}$ étant strictement inférieur à $5\tau$.

L'invention sera mieux comprise à la lecture de la description qui va suivre, donnée uniquement à titre d'exemple non limitatif et faite en se référant aux dessins sur lesquels :

- la figure 1 est une illustration schématique d'un véhicule électrique équipé d'un filtre RLC en amont d'un convertisseur électrique,
- la figure 2 est un schéma équivalent simplifié du filtre RLC du véhicule de la figure 1,
- les figures 3 et 4 sont des organigrammes de procédés de régulation à réponse pile, respectivement, de la tension $U_c$ et du courant de ligne $I_l$ du filtre RLC du véhicule de la figure 1,
- la figure 5 est un diagramme d'état d'un procédé de régulation à réponse pile à la fois de la tension $U_c$ et du courant de ligne $I_l$ du filtre RLC de la figure 1,
- la figure 6 est une illustration d'une perturbation de la tension de ligne $U_l$,
- la figure 7 est un graphe illustrant l'évolution temporelle de la tension $U_c$, du courant de ligne $I_l$, et d'un courant $I_u$ en réponse à la perturbation représentée sur le graphe de la figure 6 en absence des procédés des figures 3 et 4, et
- la figure 8 est un graphe représentant l'évolution temporelle des mêmes grandeurs que celles représentées sur la figure 7 mais dans le cas ou le procédé de régulation mis en oeuvre est celui de la figure 5.

Dans ces figures, les mêmes références sont utilisées pour désigner les mêmes éléments.

Dans la suite de cette description, les caractéristiques et fonctions bien connues de l'homme du métier ne sont pas décrites en détail.

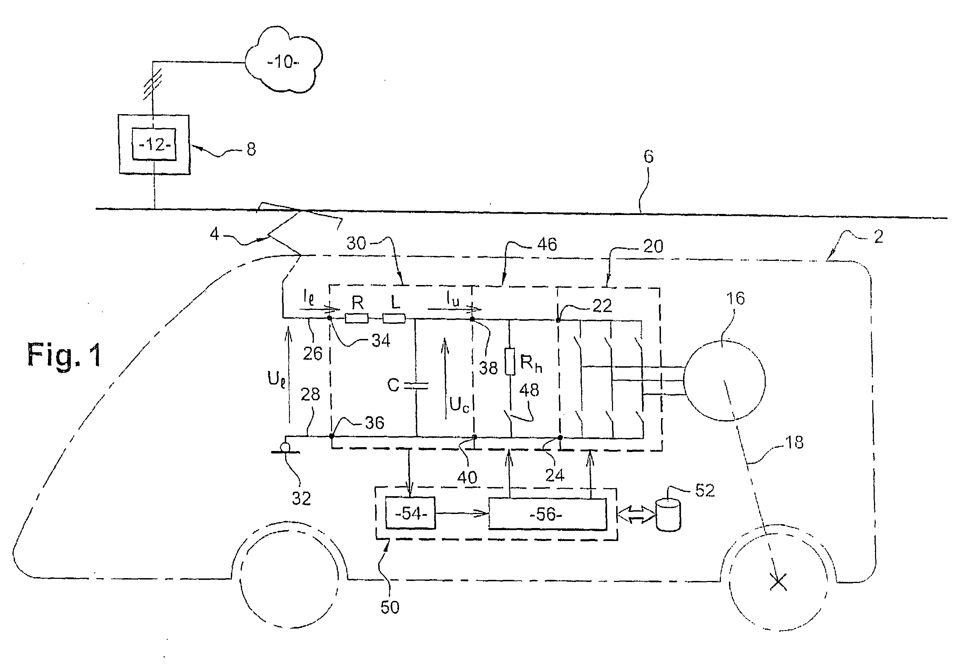

La figure 1 représente un véhicule électrique 2 équipé d'un pantographe 4 frottant sur une caténaire aérienne 6. Le véhicule 2 est, par exemple, un véhicule ferroviaire tel qu'un train. La caténaire 6 est dans cet exemple alimentée en courant continu par l'intermédiaire de plusieurs sous-stations disposées à intervalles réguliers le long de la caténaire 6. Ces sous-stations sont, par exemple, séparées l'une de l'autre par des distances supérieures à plusieurs kilomètres.

Pour simplifier la figure 1, seule une sous-station 8 a été représentée. Cette sous-station 8 est raccordée à un réseau triphasé 10 de distribution d'énergie électrique. La sous-station 8 convertie la tension triphasée en une tension continue délivrée sur le réseau 6. Typiquement, la sous-station 8 comprend un disjoncteur 12 apte à isoler électriquement la caténaire 6 du réseau 10 si le courant dans la caténaire 6 dépasse une limite $I_{lmax}$.

Le véhicule 2 est équipé d'un moteur électrique 16 propre à entraîner en rotation les roues motrices du véhicule par l'intermédiaire d'un arbre 18 d'entraînement.

Ici, le moteur 16 est un moteur triphasé synchrone ou asynchrone. Ce moteur 16 est alimenté par un convertisseur électrique 20 propre à générer une tension triphasée d'alimentation du moteur 16 à partir d'une tension continue $U_c$. Le moteur 16 fonctionne en traction et, en alternance, en générateur de tension triphasée, par exemple, lorsque le véhicule 2 freine.

La constante de temps statorique $\tau$ du moteur 16 est comprise entre 4 ms et 100 ms.

Ici, le convertisseur 20 est formé de trois bras raccordés en parallèle entre des points d'entrée 22 et 24. Chaque bras comprend deux interrupteurs commandables raccordés en série par l'intermédiaire d'un point milieu. Chaque point milieu est raccordé à une phase respective du moteur 16.

Les points 22 et 24 sont raccordés, respectivement, aux conducteurs 26 et 28 d'un bus DC par l'intermédiaire d'un filtre RLC 30.

Le conducteur 26 est raccordé électriquement au pantographe 4 par l'intermédiaire de différents équipements non représentés, comme par exemple un disjoncteur, un transformateur et un pont redresseur, de manière à être alimenté en tension continue par l'intermédiaire de la caténaire 6. Le conducteur 28 est raccordé électriquement à un potentiel de référence 32, par l'intermédiaire des rails d'une voie ferrée, ou un deuxième conducteur qui peut être aérien ou sous forme de rail posé au sol sur lequel viennent frotter des frotteurs de retour de courant.

Le filtre 30 est un filtre RLC passe-bas dont la période propre $T_f$ est strictement supérieure à la constante de temps $\tau$ du moteur 16. De préférence, la période propre $T_f$ du filtre 30 est supérieure à au moins cinq ou dix fois la constante de temps $\tau$ du moteur 16 de manière à pouvoir remplir sa fonction de filtrage.

Le filtre 30 comprend deux points d'entrée 34 et 36 raccordés, respectivement, aux conducteurs 26 et 28 de manière à recevoir entre ces points d'entrée la tension de ligne $U_l$. Le filtre 30 comprend également deux points de sortie 38 et 40 électriquement raccordés, respectivement, aux points d'entrée 22 et 24 du convertisseur 20. Une résistance R et une inductance L sont raccordées en série entre les points 34 et 38. La résistance R et l'inductance L ont été ici représentées sous la forme de deux éléments distincts. Toutefois, dans la pratique, la résistance R et l'inductance L peuvent être formées par un seul et même composant tel qu'un bobinage.

Le courant traversant l'inductance L est noté $I_l$. Ce courant est appelé courant de ligne.

Le filtre 30 comprend également un condensateur C raccordé électriquement directement entre les points de sortie 38 et 40. La tension aux bornes de ce condensateur C est notée $U_c$. Le courant traversant le point 38 est noté $I_u$.

Le véhicule 2 peut comprendre également un rhéostat 46 de freinage électrique raccordé entre les points 38 et 40 et les points 22 et 24. Typiquement, ce rhéostat 46 est destiné à dissiper l'énergie électrique produite par le moteur 16 lorsque celui-ci fonctionne en générateur et que la caténaire 6 ou le véhicule 2 n'est pas en conditions de récupérer l'énergie de freinage. Par exemple, le rhéostat 46 est formé d'une résistance $R_h$ raccordée en série avec un interrupteur commandable 48 entre les points de sortie 38 et 40. L'interrupteur 48 est commandable de manière à régler l'intensité du courant traversant la résistance $R_h$.

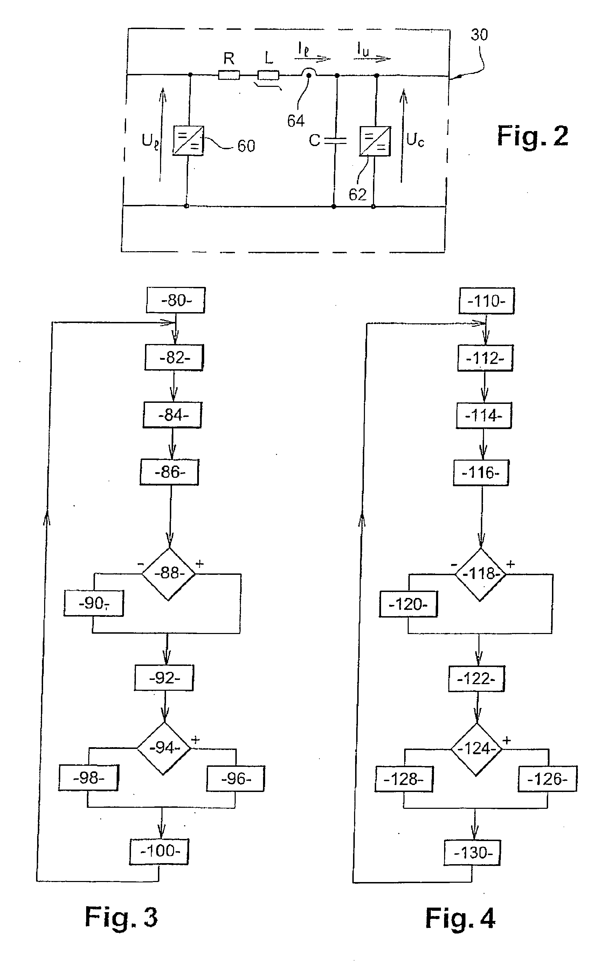

Le véhicule 2 comprend également une unité 50 de pilotage du rhéostat 46 et du convertisseur 20 à partir, en outre, de mesures réalisées au niveau du filtre 30. A cet effet, l'unité 50 est raccordée à une mémoire 52 contenant des instructions pour l'exécution d'un des procédés des figures 3 à 5. La mémoire 52 contient également la valeur des différentes limites de fonctionnement qui seront décrites plus en détail en regard des figures 3 et 4.

L'unité 50 est réalisée à partir d'un ou plusieurs calculateurs électroniques.

Ici, l'unité 50 est, par exemple, formée d'un calculateur 54 propre à établir à partir de mesures réalisées au niveau du filtre 30 une consigne $\overline{I}_{ue}$ pour l'intensité moyenne $\overline{I}_u$ du courant continu $\overline{I}_u$ sur un intervalle T.

L'unité 50 comprend également une unité de commande 56 propre à commander à la fois le rhéostat 46 et le convertisseur 20 pour atteindre la consigne $\overline{I}_{ue}$. A cet effet, l'unité 56 est raccordée au rhéostat 46 et au convertisseur 20. L'unité 56 est également apte à commander le convertisseur 20 en fonction d'une consigne $\Gamma_c$ de couple à fournir par le moteur 16 pour accélérer ou freiner le véhicule 2.

La figure 2 représente un schéma électrique simplifié du filtre 30 sur lequel sont définies les différentes conventions de signes pour la tension de ligne $U_l$, le courant de ligne $I_l$, le courant $I_u$ et la tension $U_c$. Sur la figure 2, des capteurs 60, 62 et 64, respectivement, de la tension de ligne $U_l$, de la tension $U_c$ et de l'intensité du courant de ligne $I_l$ ont été représentés. Ces capteurs 60, 62 et 64 sont raccordés au calculateur 54.

La figure 3 représente un procédé de régulation à réponse pile de la tension $U_c$ mis en oeuvre par l'unité 50 de pilotage.

Initialement, lors d'une étape 80, une période T d'échantillonnage est choisie. Dans la suite de cette description, on note $t_i$ l'instant auxquels sont échantillonnées les différentes mesures réalisées par les capteurs 60, 62 et 64 et $t_{i+1}$ le prochain instant d'échantillonnage. Ces instants $t_i$ et $t_{i+1}$ sont séparés par l'intervalle de temps T.

Ici, l'intervalle T est choisi suffisamment petit pour que pendant un seul intervalle T l'intensité du courant $I_u$ n'ait pas le temps d'atteindre sa valeur asymptotique, c'est-à-dire $U_c / R_m$, où $R_m$ est la résistance statorique du moteur 16. En effet, cette valeur asymptotique peut être jusqu'à cent fois plus élevée qu'une limite supérieure $I_{umax}$ acceptable pour l'intensité du courant $I_u$. A cet effet, l'intervalle T est donc choisi strictement inférieur à $5\tau$. De préférence, l'intervalle T est choisi inférieur à $\tau$ 5 ou à $\tau$ 10. Ici, dans le contexte des véhicules électriques, l'intervalle T est généralement inférieur à 20 ms.

Il est également intéressant de choisir un intervalle T qui ne soit pas trop petit de manière à ce que l'intensité du courant $I_u$ ait le temps de varier de façon significative entre les instants $t_i$ et $t_{i+1}$. A cet effet, ici, l'intervalle T est choisi

supérieur à 100 $\mu$s.

Ensuite, à l'instant $t_i$, lors d'une étape 82, la tension $U_c$, la tension de ligne $U_l$ et le courant de ligne $I_l$ sont mesurées. Les résultats de ces mesures sont, respectivement notés $U_{ci}$, $U_{li}$ et $I_{li}$. Lors de l'étape 82, il est également possible de calculer la valeur de l'inductance L du filtre 30 si celle-ci varie en fonction du courant $I_l$.

Lors d'une étape suivante 84, une consigne de tension $U_{cc}$ pour la tension $U_c$ est fixée. Par exemple, la consigne de tension $U_{cc}$ est définie à partir de la valeur moyenne des tensions $U_l$ mesurée aux précédents instants d'échantillonnage. La moyenne est réalisée sur une période de temps strictement supérieure à la période propre $T_f$ du filtre 30 et, de préférence au moins dix fois supérieure à la période propre $T_f$. Par exemple, la consigne de tension $U_{cc}$ est déterminée à l'aide de la relation suivante :

$$U_{cc} = \frac{1}{N} \sum_{i=1}^{N} \left( U_{li} - RI_{li} \right) \tag{1}$$

où :

- N est le nombre d'intervalles T pris en compte pour calculer la moyenne,
- les tensions $U_{li}$ sont les tensions de lignes mesurées aux instants i précédents,
- les $I_{li}$ sont les intensités du courant de ligne $I_l$ mesurées aux instants $t_i$ précédents, et
- R est la résistance du filtre 30.

Ensuite, lors d'une étape 86, une estimation $I_{lp}$ de l'intensité du courant $I_l$ qui sera atteinte à l'instant $t_{i+1}$, si à l'instant $t_{i+1}$ la tension $U_c$ est égale à la consigne de tension $U_{cc}$ est construite. Par exemple, l'estimation $I_{lp}$ est construite à l'aide de la relation suivante :

$$I_{lp} = \frac{\mu_1 \cdot \mu_2 \cdot C \cdot (a_2 - a_1) \cdot U_{cc} - \left( a_1 \cdot \mu_2 \cdot e^{\mu_2 \cdot T} - a_2 \cdot \mu_1 \cdot e^{\mu_1 \cdot T} \right) \cdot I_{li} + \mu_1 \cdot \mu_2 \cdot C \cdot \left[ a_1 \cdot a_2 \cdot (\mu_1 - \mu_2) \cdot \overline{U}_1 + \left( a_1 \cdot e^{\mu_2 \cdot T} - a_2 \cdot e^{\mu_1 \cdot T} \right) \cdot U_{ci} \right]}{(a_2 \cdot \mu_1 - a_1 \cdot \mu_2)} \tag{2}$$

où :

- C est la valeur de la capacité C du filtre 30,
- $\overline{U}_1$ est la valeur moyenne de la tension $U_l$ sur l'intervalle T,
- $\mu_1$, $\mu_2$, $a_1$, $a_2$ sont définis ci-dessous,
- $e^x$ est la fonction exponentielle.

On suppose ici que la tension de ligne est constante pendant l'intervalle T de sorte que la valeur moyenne de la $\overline{U}_1$ est égale à $U_{li}$.

$\mu_1$ et $\mu_2$ sont les valeurs propres d'une matrice d'évolution du filtre 30. Ces valeurs sont définies par les relations suivantes :

$$\mu_1 = \frac{-R \cdot C + \sqrt{R^2 \cdot C^2 - 4 \cdot L \cdot C}}{2 \cdot L \cdot C} \tag{3}$$

$$\mu_2 = \frac{-R \cdot C - \sqrt{R^2 \cdot C^2 - 4 \cdot L \cdot C}}{2 \cdot L \cdot C}$$

$$\tag{4}$$

où R, C et L sont, respectivement, les valeurs de la résistance R, de la capacité du condensateur C et la valeur de l'inductance L du filtre 30.

$a_1$ et $a_2$ sont définis par les relations suivantes :

$$a_1 = \frac{e^{\mu_1 \cdot T} - 1}{\mu_1} \tag{5}$$

$$a_2 = \frac{e^{\mu_2 \cdot T} - 1}{\mu_2} \tag{6}$$

La relation (2) a été obtenue à partir des équations d'états discrétisées du filtre 30 suivantes, après élimination de $\overline{I}_u$ dans le système d'équations (7) et (8) suivant :

$$I_{li+1} - \mu_2 \cdot C \cdot U_{ci+1} = e^{\mu_1 \cdot T} \cdot \left( I_{li} - \mu_2 \cdot C \cdot U_{ci} \right) + a_1 \cdot \left( \mu_2 \cdot \overline{I}_u + \frac{1}{L} \cdot \overline{U}_l \right) \tag{7}$$

$$I_{li+1} - \mu_1 \cdot C \cdot U_{ci+1} = e^{\mu_2 \cdot T} \cdot \left( I_{li} - \mu_1 \cdot C \cdot U_{ci} \right) + a_2 \cdot \left( \mu_1 \cdot \overline{I}_u + \frac{1}{L} \cdot \overline{U}_l \right) \tag{8}$$

où :

- $U_{ci}$ et $I_{li}$ sont la tension $U_c$ et l'intensité du courant $I_l$ mesurée à l'instant $t_i$,
- $I_{l,i+1}$ et $U_{c,i+1}$ sont l'intensité du courant $I_l$ et la tension $U_c$ à l'instant $t_{i+1}$.

Etant donné que le procédé de régulation implémenté est un procédé de régulation à réponse pile, à l'instant $t_{i+1}$, la tension $U_{c,i+1}$ est égale à la consigne de tension $U_{cc}$. De plus, en supposant que la tension de ligne $U_l$ soit constante sur l'intervalle T, la tension moyenne $\overline{U}_1$ est égale à $U_{li}$. Dans ces conditions, les relations (7) et (8) forment un système de deux équations à deux inconnues, à savoir $I_{,i+1}$ et $\overline{I}_u$. Il est donc possible de résoudre analytiquement ce système d'équations pour obtenir l'estimation $I_{lp}$ (2) qui correspond à la valeur $I_{l,i+1}$, en éliminant $\overline{I}_u$ dans le système d'équations (7) et (8).

La façon dont ont été obtenues les relations (7) et (8) est décrite plus en détail à la fin de cette description dans un chapitre appelé « Obtention des équations d'états discrétisées ».

Ensuite, lors d'une étape 88, l'estimation $I_{lp}$ est comparée à des limites de fonctionnement $I_{lmin}$ et $I_{lmax}$ à l'intérieur desquelles l'intensité du courant de ligne $I_l$ doit être maintenu. Par exemple, la limite $I_{lmin}$ est choisie pour correspondre à un état saturé de l'inductance L, ce qui permet de maintenir l'inductance L saturée tant que le procédé de la figure 3 est exécuté. Ceci présente l'avantage d'éviter que l'inductance relâche brusquement une quantité d'énergie important lorsqu'elle se déssature. La limite $I_{lmax}$ est, celle définie en regard du disjoncteur 12, ou du disjoncteur embarqué dans le véhicule pour protéger des équipements embarqués, en fonction de leur limite respective de déclenchement par véhicule. Pour le disjoncteur 12, cette limite de déclenchement est rapportée à chaque véhicule en fonction du nombre de véhicules susceptibles de circuler en même temps sur la portion de ligne alimentée par la sous-station protégée par le disjoncteur 12, par exemple : limite de disjonction de la sous-station divisée par le nombre de véhicules maximum.

Si l'estimation $I_{lp}$ n'appartient pas à la plage $[I_{lmin}, I_{lmax}]$, lors d'une étape 90, le calculateur 54 modifie la consigne de tension $U_{cc}$ pour obtenir une consigne temporaire de tension $U_{ccm}$ qui permet d'obtenir à l'instant $t_{i+1}$ une intensité du courant $I_l$ comprise dans la plage $[I_{lmin}, I_{lmax}]$. Par exemple, la consigne temporaire de tension $U_{ccm}$ est obtenue à l'aide de la relation suivante :

$$U_{ccm} = \frac{(a_2 \cdot \mu_1 - a_1 \cdot \mu_2) \cdot I_{lm} + \left(a_1 \cdot \mu_2 \cdot e^{\mu_2 \cdot T} - a_2 \cdot \mu_1 \cdot e^{\mu_1 \cdot T}\right) \cdot I_{li} - \mu_1 \cdot \mu_2 \cdot C \cdot \left[a_1 \cdot a_2 \cdot (\mu_1 - \mu_2) \cdot \overline{U}_l + \left(a_1 \cdot e^{\mu_2 \cdot T} - a_2 \cdot e^{\mu_1 \cdot T}\right) \cdot U_{ci}\right]}{\mu_1 \cdot \mu_2 \cdot C \cdot (a_2 - a_1)}$$

$$(9)$$

où $I_{lm}$ est une valeur limite de l'intensité du courant de ligne $I_l$ choisi dans l'ensemble composé de $\{I_{lmin} ; I_{lmax}\}$.

Plus précisément, $I_{lm}$ est choisi égal à $I_{lmin}$ si l'estimation $I_l p$ construite lors de l'étape 86 est plus petite que la limite $I_{lmin}$. Dans le cas contraire, c'est-à-dire si cette estimation est plus grande que la limite $I_{lmax}$, alors la valeur de l'intensité $I_{lm}$ est choisie égale à la limite $I_{lmax}$.

La relation (9) permet d'obtenir la consigne temporaire de tension $U_{ccm}$ qui est la plus proche de la consigne de tension $U_{cc}$ initiale tout en maintenant l'intensité du courant de ligne $I_l$ dans la plage $[I_{lmin}, I_{lmax}]$.

Après l'étape 90, lors d'une étape 92, le calculateur 54 calcule une consigne de courant $\overline{I}_{uc}$ pour l'intensité moyenne du courant $I_u$ entre les instants $t_i$ et $t_{i+1}$.

Si lors de l'étape 8, l'estimation $I_l p$ est comprise dans la plage $[I_{lmin}, I_{lmax}]$, alors le calculateur 54 procède directement à l'étape 92.

La consigne $\overline{I}_{uc}$ est déterminée de manière analytique pour que à l'instant $t_{i+1}$ la tension $U_c$ soit exactement égale à la consigne de tension $U_{cc}$ ou à la consigne temporaire de tension $U_{ccm}$ si l'étape 90 a été exécutée. Par exemple, la consigne de courant $\overline{I}_{uc}$ est établie à l'aide de la relation suivante :

$$\overline{I}_{uc} = \frac{\left(e^{\mu_1 \cdot T} - e^{\mu_2 \cdot T}\right) \cdot I_{li} + C \cdot \left[\mu_1 \cdot \mu_2 \cdot (a_1 - a_2) \cdot \overline{U}_l - (\mu_1 - \mu_2) \cdot U_{cc} - \left(\mu_2 \cdot e^{\mu_1 \cdot T} - \mu_1 \cdot e^{\mu_2 \cdot T}\right) \cdot U_{ci}\right]}{(a_2 \cdot \mu_1 - a_1 \cdot \mu_2)}$$

$$(10)$$

La relation (10) est obtenue en résolvant les équations d'états discrétisées définies par les relations (7) et (8) pour en extraire l'inconnu $\overline{I}_u$, après élimination de $I_{l,i+1}$ dans le système d'équations (7) et (8).

Ensuite, lors d'une étape 94, la consigne de courant $\overline{I}_{uc}$ est comparée à une plage de fonctionnement prédéterminée $[\overline{I}_{u\,min}, \overline{I}_{u\,max}]$ acceptable.

A titre d'exemple, la limite $\overline{I}_{u\,min}$ est choisie comme étant égale à l'intensité moyenne minimale du courant $I_u$ qui peut être généré par le convertisseur 20 lorsque le moteur 16 fonctionne en générateur. Cette moyenne est établie sur la période T d'échantillonnage. La limite $\overline{I}_{u\,min}$ est négative puisque le moteur fonctionne en générateur.

La limite $\overline{I}_{u\,max}$ est quant à elle, par exemple, choisie égale à la somme de l'intensité moyenne maximale du courant qui peut être absorbé par le rhéostat 46 et de l'intensité moyenne maximale du courant qui peut être absorbé par le convertisseur 20. L'intensité moyenne maximale absorbable par le convertisseur 20 est fonction des caractéristiques électriques de ce convertisseur. L'intensité moyenne maximale absorbable par le rhéostat est, par exemple, donnée par le rapport d'une tension maximale $U_{cmax}$ admissible entre les conducteurs 26 et 28 sur la valeur de la résistance $R_h$. Ces moyennes sont établies sur la période T d'échantillonnage.

Si la consigne de courant $\overline{I}_{uc}$ est dans la plage $[\overline{I}_{u\,min}, \overline{I}_{u\,max}]$ alors la consigne est transmise telle qu'elle à l'unité 56 de commande, lors d'une étape 96. Dans le cas contraire, une des deux limites $\overline{I}_{umin}$ ou $_{u\,max}$ est transmise à l'unité 56, lors d'une étape 98.

Plus précisément, lors de l'étape 98, la limite $\overline{I}_{u\,min}$ est transmise à l'unité 56 en tant que consigne de courant $\overline{I}_{uc}$ si la consigne de courant $\overline{I}_{uc}$ établie lors de l'étape 92 est inférieure à la limite $\overline{I}_{u\,min}$. Dans le cas contraire, c'est la limite $\overline{I}_{u\,max}$ qui est transmise en tant que consigne de l'intensité moyenne du courant $I_u$ à l'unité 56.

A l'issue de l'étape 96 ou 98, lors d'une étape 100, l'unité 56 commande le convertisseur 20 et si nécessaire le rhéostat 46 pendant l'intervalle T pour produire un courant $I_u$ dont l'intensité moyenne est égale à la consigne de courant $\overline{I}_{uc}$. Plus précisément, dans le cas où la consigne de courant $\overline{I}_{uc}$ est positive, c'est-à-dire qu'il s'agit de consommer du courant, l'unité 56 peut soit commander uniquement le rhéostat 46 soit uniquement le convertisseur 20, soit à la fois le rhéostat 46 et le convertisseur 20 pour produire un courant $I_u$ dont l'intensité moyenne pendant l'intervalle T est égal à la consigne de courant $\overline{I}_{uc}$.

Par exemple, si seul le rhéostat 46 est commandé, le rapport cyclique ou l'angle d'ouverture de l'interrupteur 48 est calculé à l'aide de la relation suivante :

$$\alpha = \frac{R_h \cdot \overline{I}_{uc}}{\overline{U}_c} \tag{11}$$

où $\overline{I}_c$ est la valeur moyenne de la tension $U_c$ entre l'instant $t_i$ et $t_{i+1}$.

La valeur moyenne $\overline{I}_c$ peut, par exemple, être calculée à l'aide de la relation suivante :

$$\overline{U}_c = \frac{U_{cc} + U_{ci}}{2} \tag{12}$$

L'unité 56 peut également modifier la consigne de couple $\Gamma_c$ que doit produire le moteur 16 pour que l'intensité moyenne $I_u$ soit égale à la consigne de courant $\overline{I}_{ue}$.

Une commande simultanée du convertisseur 20 et du rhéostat 46 pour produire un courant $I_u$ dont l'intensité moyenne $\overline{I}_u$ égale à une consigne de courant $\overline{I}_{ue}$ est également possible.

Dans le cas où la consigne de courant $\overline{I}_e$ est négative, c'est-à-dire que le convertisseur 20 génère du courant, l'unité 56 commande uniquement le convertisseur 20.

Les variations de la consigne de couple $\Gamma_c$ nécessaires pour produire un courant $I_u$ dont l'intensité moyenne $I_u$ est égale à la consigne $\overline{I}_{ue}$ sont réalisées tantôt en positif, tantôt en négatif autour d'un point nominal. De plus, la consigne de couple $\Gamma_c$ modifiée ne dure que pendant l'intervalle T qui est très petit devant le temps de mise en vitesse du moteur électrique. Ainsi, le conducteur ou les passagers du véhicule 2 ne ressentent pas ces modifications de couple très rapides.

A l'issue de l'étape 100, le procédé retourne à l'étape 82. Les étapes 82 à 100 sont donc réitérées à chaque instant d'échantillonnage.

La figure 4 représente un procédé de régulation à réponse pile de l'intensité du courant de ligne $I_l$, ce procédé débute par une étape 110 identique à l'étape 80. Ensuite, lors d'une étape 112, les tensions $U_{ci}$, $U_{li}$ et le courant de ligne $I_{li}$ sont mesurées. Cette étape 112 est, par exemple, identique à l'étape 82.

Lors d'une étape 114, une consigne de courant de ligne $I_{lc}$ pour l'intensité du courant de ligne $I_l$ est fixée. La consigne $I_{lc}$ est choisie dans la plage $[I_{lmin} , I_{lmax}]$. Par exemple, la consigne $I_{lc}$ est choisie égale à $I_{lmin}$ ou à $I_{lmax}$.

Ensuite, lors d'une étape 116, une estimation $U_{cp}$ de la tension $U_c$ à l'instant $t_{i+1}$ si l'intensité du courant de ligne $I_l$ à cet instant est égale à la consigne de courant de ligne $I_{lc}$, est construite. Par exemple, cette estimation de tension $U_{cp}$ est construite à l'aide de la relation suivante :

$$U_{cp} = \frac{(a_1 \cdot \mu_2 - a_2 \cdot \mu_1) \cdot I_{lc} - \left(a_1 \cdot \mu_2 \cdot e^{\mu_2 \cdot T} - a_2 \cdot \mu_1 \cdot e^{\mu_1 \cdot T}\right) \cdot I_{li} + \mu_1 \cdot \mu_2 \cdot C \cdot \left[a_1 \cdot a_2 \cdot (\mu_1 - \mu_2) \cdot \overline{U}_l - \left(a_2 \cdot e^{\mu_1 \cdot T} - a_1 \cdot e^{\mu_2 \cdot T}\right) \cdot U_{ci}\right]}{(a_1 - a_2) \cdot \mu_1 \cdot \mu_2 \cdot C} \tag{13}$$

La relation (13) est obtenue en résolvant le système d'équations d'états défini par les relations (7) et (8) dans le cas où $I_{l,i+1}$ est égal à $I_{lc}$ en éliminant $I_u$ dans le système d'équations (7) et (8).

Lors d'une étape 118, l'estimation de tension $U_{cp}$ est comparée à une plage de fonctionnement $[U_{cmin} , U_{cmax}]$ acceptable.

La limite $U_{cmax}$ est, par exemple, égale à la tension maximale acceptable entre les conducteurs 26 et 28 et au-delà de laquelle le rhéostat 46 est actionné pour écrêter toute tension dépassant cette limite de dimensionnement du convertisseur (20).

La limite $U_{cmin}$ est par exemple choisie au minimum de tension acceptable pour le fonctionnement en régime dégradé, au delà de laquelle il faut recharger le condensateur à partir de la ligne.

Lors d'une étape 120, si l'estimation de tension $U_{cp}$ n'appartient pas à la plage $[U_{cmin} , U_{cmax}]$, alors la consigne de courant de ligne $I_{lc}$ est modifiée pour obtenir une consigne temporaire de courant de ligne $I_{lcm}$ qui permet de maintenir la tension $U_c$ dans la plage $[U_{cmin} , U_{cmax}]$ à l'instant $t_{i+1}$. Par exemple, ici, la consigne temporaire de courant de ligne $I_{lcm}$ est choisie pour que à l'instant $t_{i+1}$, la tension $U_c$ soit égale à la limite $U_{cmin}$, ou à la limite $U_{cmax}$. Par exemple à cet effet, la consigne temporaire $I_{lcm}$ est construite à l'aide de la relation suivante :

$$I_{lcm} = \frac{\left(a_1 \cdot \mu_2 \cdot e^{\mu_2 \cdot T} - a_2 \cdot \mu_1 \cdot e^{\mu_1 \cdot T}\right) \cdot I_{li} - \mu_1 \cdot \mu_2 \cdot C \cdot \left[a_1 \cdot a_2 \cdot \left(\mu_1 - \mu_2\right) \cdot \overline{U}_l - \left(a_2 \cdot e^{\mu_1 \cdot T} - a_1 \cdot e^{\mu_2 \cdot T}\right) \cdot U_{ci} - \left(a_1 - a_2\right) \cdot U_{cm}\right]}{a_1 \cdot \mu_2 - a_2 \cdot \mu_1}$$

$$(14)$$

où $U_{cm}$ est une valeur choisie dans l'ensemble composé de $\{U_{cm}in, U_{cmax}\}$.

Plus précisément, la valeur $U_{cm}$ est choisie égale à $U_{cmin}$ si l'estimation $U_{cp}$ est inférieure à la limite $U_{cmin}$. Dans le cas contraire, c'est-à-dire si l'estimation $U_{cp}$ est supérieure à la limite $U_{cmax}$, la valeur $U_{cm}$ est choisie égale à la limite $U_{cmax}$.

A l'issue de l'étape 120, ou si l'estimation $U_{cp}$ appartient à la plage $[U_{cmin}, U_{cmax}]$ une étape 122 de calcul d'une consigne de courant $\overline{I}_{uc}$ pour l'intensité moyenne du courant $I_u$ entre les instants $t_i$ et $t_{i+1}$ est réalisée. Plus précisément, la consigne de courant $\overline{I}_{uc}$ est calculée pour que exactement à l'instant $t_{i+1}$ l'intensité du courant de ligne $I_l$ soit égale à la consigne du courant de ligne $I_{lc}$ ou à la consigne temporaire de courant de ligne $I_{lcm}$ si l'étape 120 a été exécutée.

Par exemple, la consigne $\overline{I}_{uc}$ est calculée à l'aide de la relation suivante :

$$\overline{I}_{uc} = \frac{\left(\mu_1 - \mu_2\right) \cdot I_{lc} - \left(\mu_1 \cdot e^{\mu_1 \cdot T} - \mu_2 \cdot e^{\mu_2 \cdot T}\right) \cdot I_{li} + \mu_1 \cdot \mu_2 \cdot C \cdot \left(e^{\mu_1 \cdot T} - e^{\mu_2 \cdot T}\right) \cdot \left(U_{ci} - \overline{U}_l\right)}{\mu_1 \cdot \mu_2 \cdot \left(a_1 - a_2\right)} \quad (15)$$

La relation (15) est obtenue en résolvant le système d'équations d'états discrétisées défini par les relations (7) et (8) dans le cas où $I_{l,i+1}$ est égal à $I_{lc}$ et $\overline{I}_u$ est égal à $\overline{I}_{ue}$, après élimination de $U_{c,i+1}$.

Ensuite, l'unité 56 exécute des étapes 124, 126, 128, 130, respectivement, identiques aux étapes 94, 96, 98 et 100 du procédé de la figure 3.

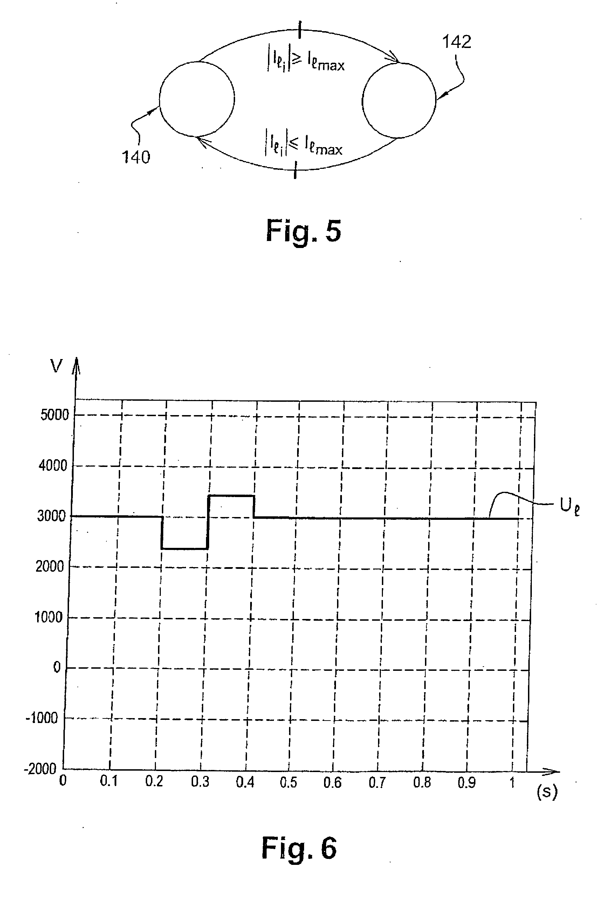

Etant donné que l'unité 50 de pilotage ne peut pas agir sur la tension de ligne $U_l$ qui est fixée par la tension de la caténaire 6, seule l'intensité du courant $I_u$ peut être commandée. Dans ces conditions, pendant un intervalle T, il est uniquement possible de réguler soit seulement la tension $U_c$, soit seulement le courant de ligne $I_l$. En d'autres termes, les procédés des figures 3 et 4 ne peuvent pas être exécutés simultanément. Par contre, il est possible de réguler, en alternance, la tension $U_c$ et le courant de ligne $I_l$ en alternant l'exécution des procédés des figures 3 et 4. Cela permet par exemple de stabiliser la tension $U_c$ tout en maintenant le courant de ligne $I_l$ dans la plage de fonctionnement $[I_{lmin}, I_{lmax}]$. Par exemple, pour empêcher le dépassement de la limite $I_{lmax}$, le procédé de la figure 5 est mis en oeuvre.

Le procédé de la figure 5 comporte :

- une phase 140 de régulation de la tension $U_c$ à l'aide du procédé de la figure 3, et
- une phase 142 de régulation du courant de ligne $I_l$ à l'aide du procédé de la figure 4.

L'unité 50 passe automatiquement de la phase 140 à la phase 142 lorsque l'intensité $I_{li}$ mesurée devient strictement supérieure à la limite $I_{lmax}$.

A l'inverse, l'unité 50 passe automatiquement de la phase 142 à la phase 140 lorsque l'intensité $I_{li}$ devient inférieure à la limite prédéterminée, par exemple, égale à $I_{lmax}$.

Ainsi, tant que l'intensité mesurée du courant $I_l$ est strictement inférieure à la limite $I_{lmax}$, la tension $U_c$ est maintenue égale à chaque instant $t_i$ à la consigne de tension $U_{cc}$. Les oscillations de la tension de consigne $U_{cc}$ suite à une perturbation de la tension de ligne $U_l$ sont donc limitées. Si l'intensité du courant de ligne $I_l$ dépasse la limite $I_{lmax}$, alors le premier objectif consistant à réguler la tension $U_c$ est abandonné et on passe à la phase 142. Par exemple, lors de la phase 142, la consigne de courant de ligne $I_{lc}$ peut être choisie égale à la limite $I_{lmax}$ ou strictement inférieure à la limite $I_{lmax}$. La phase 142 s'arrête dès que l'intensité mesurée du courant de ligne $I_l$ est inférieure ou égale à la limite $I_{lmax}$ et l'on retourne alors à la phase 140.

Ainsi, en alternant temporellement les phases 140 et 142, la tension $U_c$ peut être stabilisée tout en maintenant l'intensité du courant de ligne $I_l$ inférieure à la limite $I_{lmax}$.

De façon similaire, les phases 140 et 142 sont exécutées en alternance pour maintenir l'intensité du courant $I_l$ supérieure à la limite $I_{lmin}$.

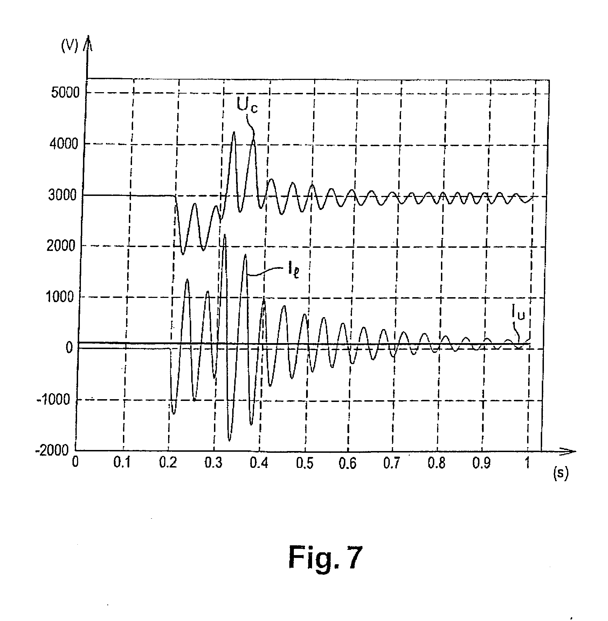

Le fonctionnement du procédé de la figure 5 est illustré dans le cas particulier d'une perturbation de la tension de ligne $U_l$ représentée sur le graphe de la figure 6. Cette perturbation consiste à faire chuter instantanément la tension de ligne $U_l$ de 3000 volts à 2400 volts et à maintenir la tension de ligne $U_l$ égale à 2400 volts pendant 0,1 seconde. Ensuite, la tension de ligne $U_l$ remonte instantanément à 3450 volts et reste égale à cette valeur pendant 0,1 seconde avant de retourner, instantanément, à 3000 volts. Les variations de la tension de ligne $U_l$ s'effectuent ici instantanément. On comprend donc que ce qui est représenté sur la figure 7 n'est qu'une perturbation théorique.

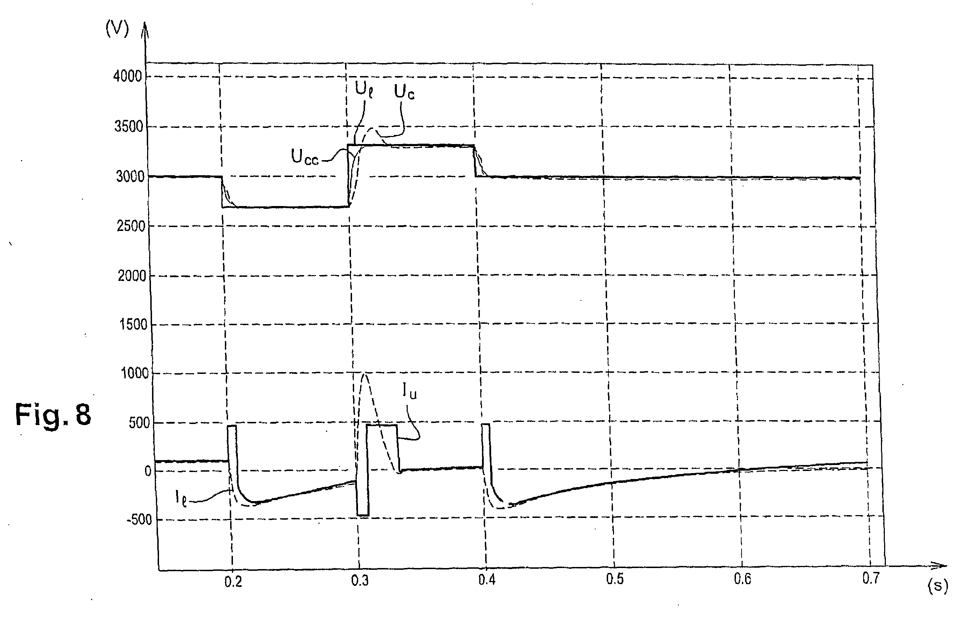

Les courbes représentées dans les figures 7 et 8 ont été obtenues par simulation d'un modèle du véhicule 2 avec les valeurs numériques suivantes :

- L=3mH,
- R=25mΩ,
- C=18mF,
- $U_l$=3000V,
- $U_{cmax}$=3500V,
- $I_{umax}$=470A,
- $I_{umin}$=-470A,
- $I_{lmax}$=2000A,
- $R_h$=2Ω.

La figure 7 représente l'évolution en fonction du temps de la tension $U_c$, de l'intensité du courant de ligne $I_l$ et de l'intensité du courant $I_u$ dans le cas où aucun procédé de régulation de la tension $U_c$ ou du courant de ligne $I_l$ n'est mis en oeuvre. Comme on peut le constater, cela se traduit par des fortes oscillations de la tension $U_c$ et de l'intensité du courant de ligne $I_l$.

Toute chose égale par ailleurs, le graphe de la figure 8 représente l'évolution temporelle de la tension $U_c$, et des intensités des courants $I_l$ et $I_u$ en réponse à la perturbation représentée sur la figure 6 lorsque le procédé de la figure 5 est mis en oeuvre. De plus, on choisi ici la consigne de tension $U_{cc}$ comme étant égale à la moyenne de la tension de ligne $U_l$ sur les dix dernières millisecondes de manière à imposer de brusques variations de cette consigne qui se traduisent nécessairement par la création de situations où la consigne de courant $I_{uc}$ atteint les limites de la plage $[I_{u\,min}, I_{u\,max}]$. On notera que ce choix est ici fait uniquement à titre d'illustration pour montrer ce qui se passe lorsque la consigne $I_{uc}$ atteint l'une des limites $I_{u\,min}$ ou $\overline{I}_{u\,max}$. Dans la pratique, la consigne de tension $U_{cc}$ sera choisie de façon à lisser les perturbations de la tension de ligne $U_l$ comme indiqué en regard de l'étape 82.

Comme illustré sur le graphe de la figure 8, la tension $U_c$ est maintenue proche de la consigne de tension $U_{cc}$. On comprend donc qu'à l'aide de ce procédé, les variations de la tension $U_c$ sont très bien maîtrisées même en cas de brusques variations de la tension de ligne $U_l$.

De plus, comme illustré par les paliers dans la courbe représentant l'évolution du courant $I_u$ en fonction du temps, les limites $\overline{I}_{u\,max}$ et $I_{u\,min}$ sont atteintes de sorte que pendant ces paliers, la tension $U_c$ n'est pas strictement égale à la consigne de tension $U_{cc}$. Par contre, en dehors de ces paliers, la tension $U_c$ est égale à la consigne de tension $U_{cc}$.

Ainsi, comme l'illustre la figure 8, grâce au procédé de la figure 5, les variations de la tension $U_c$ sont maîtrisées tout en maintenant les intensités $I_u$ et $I_l$ dans leur plage de fonctionnement respective.

De nombreux autres modes de réalisation sont possibles.

Par exemple, le conducteur 26 du bus DC peut être raccordé au pantographe 4 par l'intermédiaire d'un redresseur tel qu'un pont redresseur à diodes et d'un transformateur dans le cas d'une caténaire alimentée en tension monophasée alternative.

L'une de l'intensité du courant de ligne $I_l$ et de la tension $U_c$ peut être estimée au lieu d'être mesurée. L'intensité du courant de ligne $I_l$ et la tension $U_c$ peuvent aussi être toutes les deux estimées.

Ce qui a été décrit ci-dessus s'applique également au cas des moteurs à courant continu. Dans ce cas, le convertisseur 20 est, par exemple, un hacheur/abaisseur.

Enfin, on notera que des contraintes techniques peuvent imposer d'utiliser une approximation $\hat{I}_{uc}$ de la consigne de courant $\overline{I}_{uc}$ et non pas la valeur exacte donnée par la relation (10) ou (15). Par exemple, une de ces contraintes techniques est le nombre de chiffres après la virgule que peut gérer le calculateur 54. Ainsi, dans cette description, on considère que d'un point de vue pratique, une consigne de courant $\hat{I}_{uc}$ est établie à partir du système d'équations d'états défini par les relations (7) et (8) si le coefficient d'intercorrélation $\alpha$ suivant est supérieur à 0,9 :

$$\alpha = \frac{1}{NT} \int_0^{NT} \frac{\overline{i}_{uc}(t)\hat{i}_{uc}(t)}{\sqrt{\overline{i}_{uceff}\hat{i}_{uceff}}}dt \qquad (16)$$

où :

- N est un nombre entier supérieur à 20 d'intervalles T pris en compte pour calculer le coefficient d'intercorrélation $\alpha$,
- $\overline{I}_{ue}$ (t) est la valeur exacte de la consigne pour l'intensité moyenne du courant $I_u$ obtenue à l'aide de la relation (10)

ou (15),

- $\hat{I}_{uc}$ (t) est l'approximation de la consigne $\bar{I}_{uc}$ (t) envoyée par le calculateur 54 à l'unité 56,
- $\bar{I}_{ueeff}$ est défini par la relation suivante :

$$\bar{I}_{uceff} = \frac{1}{NT} \int_0^{NT} \bar{I}_{uc}^2 (t) dt \qquad (17)$$

- $\bar{I}_{uceff}$ est défini par la relation suivante :

$$\hat{I}_{uceff} = \frac{1}{NT} \int_0^{NT} \hat{I}_{uc}^2 (t) dt \qquad (18)$$

Tel que défini ci-dessus, le coefficient d'intercorrélation $\alpha$ représente le degré de corrélation entre l'approximation $\hat{I}_{uc}$ et la consigne de courant exacte $\bar{I}_{uc}$.

De préférence, si des approximations doivent être faites, celles-ci seront réalisées de manière à ce que le coefficient d'intercorrélation $\alpha$ défini ci-dessus soit même supérieur à 0,97 ou 0,99.

**Annexe 1** :

Etablissement des équations d'états discrétisées du filtre 30

**I - Modèle électrotechnique du filtre de ligne**

*I-1 - Système d'équations différentielles du filtre RLC*

$$U_l - U_c = L \cdot \frac{dI_l}{dt} + R \cdot I_l$$

$$I_l - I_u = C \cdot \frac{dU_c}{dt}$$

*I-2 - Système d'équations d'états*

Le filtre est un système du second ordre, il possède donc deux degrés de liberté. Le vecteur d'état est donc un vecteur à deux dimensions. Le courant de ligne et la tension du condensateur peuvent être choisis comme les deux coordonnées du vecteur d'état du filtre :

$$\vec{X}(t) = \begin{bmatrix} I_l(t) \\ U_c(t) \end{bmatrix}$$

Ces deux variables sont mesurées et donc connues. Si ce n'était pas le cas, il faudrait en estimer une ou l'observer.

Les variables de commande du système sont le courant d'utilisation et la tension de la ligne. La tension de la ligne n'étant pas modifiable directement, elle entre dans le modèle comme une variable de commande mesurée et non calculée.

$$\vec{V} = \begin{bmatrix} I_u \\ U_l \end{bmatrix}$$

Le système d'équations d'états ainsi défini, peut s'écrire à partir des équations différentielles :

$$\frac{dI_l}{dt} = -\frac{R}{L} \cdot I_l - \frac{1}{L} \cdot U_c + \frac{1}{L} \cdot U_l$$

$$\frac{dU_c}{dt} = \frac{1}{C} \cdot I_l - \frac{1}{C} \cdot I_u$$

L'équation d'état continue s'en déduit :

$$\begin{bmatrix} \dfrac{dI_l}{dt} \\ \dfrac{dU_c}{dt} \end{bmatrix} = \begin{bmatrix} -\dfrac{R}{L} & -\dfrac{1}{L} \\ \dfrac{1}{C} & 0 \end{bmatrix} \cdot \begin{bmatrix} I_l \\ U_c \end{bmatrix} + \begin{bmatrix} 0 & \dfrac{1}{L} \\ -\dfrac{1}{C} & 0 \end{bmatrix} \cdot \begin{bmatrix} I_u \\ U_l \end{bmatrix}$$

En comparant avec le système d'équations de la forme continue :

$$\dot{\vec{X}} = A \cdot \vec{X} + B \cdot \vec{V}$$
$$\vec{Y} = E \cdot \vec{X}$$

on obtient :

$$\dot{\vec{X}} = \begin{bmatrix} -\dfrac{R}{L} & -\dfrac{1}{L} \\ \dfrac{1}{C} & 0 \end{bmatrix} \cdot \vec{X} + \begin{bmatrix} 0 & \dfrac{1}{L} \\ -\dfrac{1}{C} & 0 \end{bmatrix} \cdot \vec{V}$$

$$\vec{Y} = E \cdot \vec{X}$$

Sachant de plus que le vecteur de mesure est le vecteur d'état :

$$A = \begin{bmatrix} -\dfrac{R}{L} & -\dfrac{1}{L} \\ \dfrac{1}{C} & 0 \end{bmatrix} \quad B = \begin{bmatrix} 0 & \dfrac{1}{L} \\ -\dfrac{1}{C} & 0 \end{bmatrix}$$

$$E = I_2$$

où :

- $I_2$ est la matrice unité de dimension 2,
- A est la matrice d'évolution libre, et
- B est la matrice de commande.

## II - Diagonalisation de la matrice d'évolution

### II - 1 - Equation caractéristique de la matrice d'évolution

C'est le déterminant de la matrice : $\mu \cdot I\text{-}A$, égalé à 0 : donc :

$$\det \begin{bmatrix} \mu + \dfrac{R}{L} & \dfrac{1}{L} \\ -\dfrac{1}{C} & \mu \end{bmatrix} = 0$$

$$\mu \cdot \left( \mu + \frac{R}{L} \right) + \frac{1}{L \cdot C} = 0$$

$$\mu^2 + \mu \cdot \frac{R}{L} + \frac{1}{L \cdot C} = 0$$

### II - 2 - Valeurs propres de la matrice d'évolution

Ce sont les racines de l'équation caractéristique

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

Il est intéressant de noter que ces valeurs propres sont constantes dans la mesure où l'inductance ne varie pas avec le courant et qu'elles dépendent du courant dans le cas contraire.

Ces racines vérifient l'équation caractéristique :

$$\mu_1 \cdot \left( \mu_1 + \frac{R}{L} \right) = \mu_2 \cdot \left( \mu_2 + \frac{R}{L} \right) = -\frac{1}{L \cdot C}$$

ce que l'on peut encore écrire :

$$\left(\mu_i + \frac{R}{L}\right)\cdot \mu_i + \frac{1}{L\cdot C} = 0$$

L'équation caractéristique fournit également la somme et le produit des valeurs propres comme relations remarquables :

$$\boxed{\mu_1 + \mu_2 = -\frac{R}{L} \quad \mu_1 \cdot \mu_2 = \frac{1}{L\cdot C}}$$

On peut aussi remarquer que la racine double $\mu_1 = \mu_2$ est obtenue pour :

$$R = 2\cdot \sqrt{\frac{L}{C}}$$

qui est la résistance critique d'amortissement.

Si $R = 0$, $\mu_i = \pm i \cdot \omega$, avec : $\omega = \dfrac{1}{\sqrt{L\cdot C}}$ . On reconnaît les pôles complexes conjugués. Si $R \neq 0$, les pôles sont complexes conjugués avec une partie réelle négative et si la résistance est suffisamment grande, au dessus de l'amortissement critique, les pôles sont réels négatifs.

### II - 3 - Vecteurs propres de la matrice d'évolution

Ils sont calculés par :

$$\left(\mu_i \cdot I - A\right)\cdot \Pi_i = 0$$

soit:

$$\begin{bmatrix} \mu_i + \dfrac{R}{L} & \dfrac{1}{L} \\[2em] -\dfrac{1}{C} & \mu_i \end{bmatrix} \cdot \begin{bmatrix} \pi_{1i} \\[1em] \pi_{2i} \end{bmatrix} = 0$$

Le produit de matrices s'écrit alors sous forme d'un système d'équations :

$$\left(\mu_i + \frac{R}{L}\right)\cdot \pi_{1i} + \frac{1}{L}\cdot \pi_{2i} = 0$$

De la deuxième équation du système on déduit :

$$-\frac{1}{C} \cdot \pi_{1i} + \mu_i \cdot \pi_{2i} = 0$$

relation qui permet de réécrire la première équation :

$$\pi_{1i} = \mu_i \cdot C \cdot \pi_{2i}$$

Cette équation est toujours vérifiée pour les deux valeurs propres, quel que soit $\pi_{2i} \neq 0$, du fait que le premier facteur est identiquement nul d'après l'équation caractéristique.

Choisissons donc $\pi_{21} = -1$ et $\pi_{22} = 1$. On en déduit donc :

$$\left[ \left( \mu_i + \frac{R}{L} \right) \cdot \mu_i + \frac{1}{L \cdot C} \right] \cdot \pi_{2i} = 0$$

La matrice de passage est constituée par les vecteurs propres :

$$\pi_{11} = -\mu_1 \cdot C \ \text{et} \ \pi_{12} = \mu_2 \cdot C$$

soit :

$$P = \begin{bmatrix} \pi_{11} & \pi_{12} \\ \pi_{21} & \pi_{22} \end{bmatrix}$$

L'inverse de la matrice de passage :

$$P^{-1} = \frac{1}{(\mu_2 - \mu_1) \cdot C} \cdot \begin{bmatrix} 1 & -\mu_2 \cdot C \\ 1 & -\mu_1 \cdot C \end{bmatrix}$$

### II - 3 - Matrice diagonale

On peut maintenant écrire :

$$A = P \cdot D^{-1} \cdot P^{-1}$$

avec :

$$D = \begin{bmatrix} \mu_1 & 0 \\ 0 & \mu_2 \end{bmatrix} \quad D^{-1} = \begin{bmatrix} \dfrac{1}{\mu_1} & 0 \\ 0 & \dfrac{1}{\mu_2} \end{bmatrix}$$

**III - Projection des équations d'états**

*III-1- Equations d'états discrétisées*

Les équations d'états discrétisées sont obtenues par intégration depuis l'instant initial $t_i$, jusqu'à la fin $t_{i+1}$ de la période d'échantillonnage de durée T :

$$\vec{X}_{t_{i+1}} = F \cdot \vec{X}_{t_i} + G \cdot \vec{\bar{V}}_{t_i \rightarrow t_{i+1}}$$

avec :

$$F = e^{A \cdot T} \quad G = A^{-1} \cdot \left( e^{A \cdot T} - I \right) \cdot B$$

Si $\overline{X}_{ti}$, représente le vecteur d'état à l'instant initial, $\overline{X}_{ti+1}$ représente alors la prédiction du vecteur d'état. On notera maintenant :

$$\vec{X}_i = \vec{X}_{t_i} \text{ et } \vec{X}_p = \vec{X}_{t_{i+1}}$$

On utilise la matrice de passage p et la matrice diagonale de la matrice d'évolution pour calculer les matrices de transition et de commande :

$$F = P \cdot e^{D \cdot T} \cdot P^{-1} \quad G = A^{-1} \cdot P \cdot \left( e^{D \cdot T} - I \right) P^{-1} \cdot B$$

Le système d'équations d'états discrétisées, peut alors être écrit :

$$\vec{X}_p = P \cdot e^{D \cdot T} \cdot P^{-1} \cdot \vec{X}_i + A^{-1} \cdot P \cdot \left( e^{D \cdot T} - I \right) P^{-1} \cdot B \cdot \vec{\bar{V}}$$

*III - 2 - Projection des vecteurs d'états*

Il suffit maintenant de projeter le système d'équations d'états discrétisées dans la base des vecteurs propres en multipliant à gauche par l'inverse de la matrice de passage et d'isoler les vecteurs « propres » d'états.

$$P^{-1} \cdot \vec{X}_p = e^{D \cdot T} \cdot P^{-1} \cdot \vec{X}_i + P^{-1} \cdot A^{-1} \cdot P \cdot \left( e^{D \cdot T} - I \right) \cdot P^{-1} \cdot B \cdot \vec{\bar{V}}$$

en remarquant que :

$$P^{-1} \cdot A^{-1} \cdot P = \left( P^{-1} \cdot A \cdot P \right)^{-1} = D^{-1}$$

on simplifie la relation vectorielle :

$$\left[ P^{-1} \cdot \vec{X}_p \right] = e^{D \cdot T} \cdot \left[ P^{-1} \cdot \vec{X}_i \right] + D^{-1} \cdot \left( e^{D \cdot T} - I \right) \cdot \left[ P^{-1} \cdot B \right] \cdot \vec{\bar{V}}$$

Pour simplifier la représentation finale de l'équation d'état, multiplions les deux membres de l'équation par la constante : $(\mu_2 - \mu_1)\cdot C$ :

$$\left(\mu_2-\mu_1\right)\cdot C\cdot\left[P^{-1}\cdot\bar{X}_p\right]=e^{D\cdot T}\cdot\left(\mu_2-\mu_1\right)\cdot C\cdot\left[P^{-1}\cdot\bar{X}_i\right]+D^{-1}\cdot\left(e^{D\cdot T}-I\right)\cdot\left(\mu_2-\mu_1\right)\cdot C\cdot\left[P^{-1}\cdot B\right]\cdot\bar{\bar{V}}$$

Les vecteurs propres d'état sont définis par :

$$\bar{\Psi}=\left(\mu_2-\mu_1\right)\cdot C\cdot\left[P^{-1}\cdot\bar{X}\right]$$

$$\bar{\Psi}=\begin{bmatrix}1 & -\mu_2\cdot C\\ 1 & -\mu_1\cdot C\end{bmatrix}\cdot\bar{X}$$

$$\bar{\Psi}=\begin{bmatrix}1 & -\mu_2\cdot C\\ 1 & -\mu_1\cdot C\end{bmatrix}\cdot\begin{bmatrix}I_l\\ U_c\end{bmatrix}$$

Leurs coordonnées sont donc :

$$\begin{bmatrix}\Psi_1\\ \Psi_2\end{bmatrix}=\begin{bmatrix}I_l-\mu_2\cdot C\cdot U_c\\ I_l-\mu_1\cdot C\cdot U_c\end{bmatrix}$$

L'équation matricielle d'état peut être écrite avec cette nouvelle définition, en notant par ailleurs que :

$$e^{D\cdot T}=\begin{bmatrix}e^{\mu_1\cdot T} & 0\\ 0 & e^{\mu_2\cdot T}\end{bmatrix}$$

$$\bar{\Psi}_p=e^{D\cdot T}\cdot\bar{\Psi}_i+\begin{bmatrix}\dfrac{1}{\mu_1} & 0\\ 0 & \dfrac{1}{\mu_2}\end{bmatrix}\cdot\begin{bmatrix}e^{\mu_1\cdot T}-1 & 0\\ 0 & e^{\mu_2\cdot T}-1\end{bmatrix}\cdot\begin{bmatrix}1 & -\mu_2\cdot C\\ 1 & -\mu_1\cdot C\end{bmatrix}\cdot\begin{bmatrix}0 & \dfrac{1}{L}\\ -\dfrac{1}{C} & 0\end{bmatrix}\cdot\begin{bmatrix}\bar{I}_u\\ \bar{U}_l\end{bmatrix}$$

$$\bar{\Psi}_p=e^{D\cdot T}\cdot\bar{\Psi}_i+\begin{bmatrix}\dfrac{e^{\mu_1\cdot T}-1}{\mu_1} & 0\\ 0 & \dfrac{e^{\mu_2\cdot T}-1}{\mu_2}\end{bmatrix}\cdot\begin{bmatrix}\mu_2 & \dfrac{1}{L}\\ \mu_1 & \dfrac{1}{L}\end{bmatrix}\cdot\begin{bmatrix}\bar{I}_u\\ \bar{U}_l\end{bmatrix}$$

$$\vec{\Psi}_p = e^{D \cdot T} \cdot \vec{\Psi}_i + \begin{bmatrix} \dfrac{e^{\mu_1 \cdot T} - 1}{\mu_1} & 0 \\ 0 & \dfrac{e^{\mu_2 \cdot T} - 1}{\mu_2} \end{bmatrix} \cdot \begin{bmatrix} \mu_2 \cdot \bar{I}_u + \dfrac{1}{L} \cdot \bar{U}_l \\ \mu_1 \cdot \bar{I}_u + \dfrac{1}{L} \cdot \bar{U}_l \end{bmatrix}$$

Le vecteur « propre » de commande est défini par :

$$\bar{\bar{\Xi}} = \begin{bmatrix} \mu_2 \cdot \bar{I}_u + \dfrac{1}{L} \cdot \bar{U}_l \\ \mu_1 \cdot \bar{I}_u + \dfrac{1}{L} \cdot \bar{U}_l \end{bmatrix}$$

Le système des équations d'états peut maintenant être écrit de manière simplifiée :

$$\vec{\Psi}_p = e^{D \cdot T} \cdot \vec{\Psi}_i + \begin{bmatrix} \dfrac{e^{\mu_1 \cdot T} - 1}{\mu_1} & 0 \\ 0 & \dfrac{e^{\mu_2 \cdot T} - 1}{\mu_2} \end{bmatrix} \cdot \bar{\bar{\Xi}}$$

soit encore :

$$\Psi_{1p} = e^{\mu_1 \cdot T} \cdot \Psi_{1i} + \dfrac{e^{\mu_1 \cdot T} - 1}{\mu_1} \cdot \Xi_1$$

$$\Psi_{2p} = e^{\mu_2 \cdot T} \cdot \Psi_{2i} + \dfrac{e^{\mu_2 \cdot T} - 1}{\mu_2} \cdot \Xi_2$$

Enfin, en posant :

$$a_1 = \dfrac{e^{\mu_1 \cdot T} - 1}{\mu_1}$$

$$a_2 = \dfrac{e^{\mu_2 \cdot T} - 1}{\mu_2}$$

les équations « propres » d'états deviennent :

$$\Psi_{1p} = e^{\mu_1 \cdot T} \cdot \Psi_{1i} + a_1 \cdot \Xi_1$$

$$\Psi_{2p} = e^{\mu_2 \cdot T} \cdot \Psi_{2i} + a_2 \cdot \Xi_2$$

On peut maintenant expliciter le système précédent en utilisant la définition des variables intermédiaires :

$$I_{lp} - \mu_2 \cdot C \cdot U_{cp} = e^{\mu_1 \cdot T} \cdot \left( I_{li} - \mu_2 \cdot C \cdot U_{ci} \right) + a_1 \cdot \left( \mu_2 \cdot \overline{I}_u + \frac{1}{L} \cdot \overline{U}_l \right)$$

$$I_{lp} - \mu_1 \cdot C \cdot U_{cp} = e^{\mu_2 \cdot T} \cdot \left( I_{li} - \mu_1 \cdot C \cdot U_{ci} \right) + a_2 \cdot \left( \mu_1 \cdot \overline{I}_u + \frac{1}{L} \cdot \overline{U}_l \right)$$

**Revendications**

1. Procédé de régulation d'une tension $U_c$ entre un premier et un second points (38, 40) de sortie d'un filtre RLC (30) passe-bas de période propre $T_f$, ce filtre RLC comportant deux points (34, 36) d'entrée électriquement raccordés, respectivement, aux conducteurs (26, 28) d'un bus DC d'un véhicule électrique alimenté par l'intermédiaire d'une caténaire, le premier et le second points (38, 40) de sortie étant électriquement raccordés à un convertisseur électrique commandable (20) permettant de commander le couple exercé par un moteur électrique (16) de traction du véhicule électrique, la constante de temps statorique $\tau$ de ce moteur étant strictement inférieure à la période propre $T_f$,
ce procédé comportant la mesure (82) ou l'estimation de l'intensité $I_{li}$ d'un courant de ligne $I_l$ traversant l'inductance (L) du filtre à un instant $t_i$, de la tension $U_{ci}$ entre les points (38, 40) de sortie du filtre à l'instant $t_i$, et d'une tension de ligne $U_l$ entre les points (34, 36) d'entrée du filtre,
**caractérisé en ce que** ce procédé est un procédé de régulation à réponse pile comportant :

   - le calcul (92) d'une consigne $\overline{I}_{uc}$ pour l'intensité moyenne $\overline{I}_u$ d'un courant continu $I_u$ traversant le premier point (38) de sortie du filtre entre l'instant $t_i$ et un instant $t_{i+1}$, cette consigne $\overline{I}_{uc}$ étant établie à partir des équations d'états discrétisées du filtre de manière à ce que la tension $U_c$ soit égale à une consigne prédéterminée de tension $U_{cc}$ à l'instant $t_{i+1}$, ces équations d'états discrétisées reliant entre elles les intensités $I_{li}$, $I_{l,i+1}$ du courant $I_l$ de ligne respectivement aux instants $t_i$ et $t_{i+1}$, les tensions $U_{ci}$ et $U_{c,i+1}$ entre les points (38, 40) de sortie du filtre respectivement aux instants $t_i$ et $t_{i+1}$, la tension moyenne de ligne $\overline{U}_1$ entre les instants $t_i$ et $t_{i+1}$ et l'intensité moyenne $\overline{I}_u$,
   - la commande (100) du convertisseur électrique pour produire un courant $I_u$ traversant le point (38) de sortie du filtre dont l'intensité moyenne $\overline{I}_u$ entre les instants $t_i$ et $t_{i+i}$ est égale à la consigne $\overline{I}_{uc}$, l'intervalle T de temps entre les instants $t_i$ et $t_{i+1}$ étant strictement inférieur à $5_\tau$.

2. Procédé selon la revendication 1, dans lequel la consigne de tension $U_{cc}$ est choisie systématiquement inférieure ou égale à une limite $U_{cmax}$, la limite $U_{cmax}$ correspondant à la tension maximale admissible à l'entrée du convertisseur électrique (20) ou entre les points (38, 40) de sortie du filtre.

3. Procédé selon l'une quelconque des revendications précédentes, dans lequel le procédé comporte :

   - la construction (86) d'une estimation $I_{lp}$ du courant de ligne $I_l$ qui sera atteinte si la tension $U_c$ est égale à la consigne de tension $U_{cc}$ à l'instant $t_{i+1}$,
   - la comparaison (88) de l'estimation $I_{lp}$ à au moins une limite prédéterminée $I_{lm}$,
   - uniquement si la limite prédéterminée $I_{lm}$ est franchie, la modification (90) de la consigne de tension $U_{cc}$ de manière à obtenir une consigne temporaire de tension $U_{ccm}$ qui correspond à une estimation $I_{lp}$ qui ne franchit pas la limite prédéterminée $I_{lm}$, et l'utilisation de la consigne temporaire de tension $U_{ccm}$ en lieu et place de la consigne de tension $U_{cc}$ lors du calcul de la consigne $\overline{I}_{uc}$ uniquement pour l'intervalle T en cours, et
   - si la limite prédéterminée $I_{lm}$, n'est pas franchie, l'utilisation de la consigne de tension $U_{cc}$ pour le calcul de la consigne $\overline{I}_{uc}$ pour l'intervalle T en cours.

4. Procédé selon l'une quelconque des revendications précédentes, dans lequel la consigne $\overline{I}_{uc}$ est une solution du système d'équations suivant :

$$I_{lp} - \mu_2 \cdot C \cdot U_{cc} = e^{\mu_1 \cdot T} \cdot \left( I_{li} - \mu_2 \cdot C \cdot U_{ci} \right) + a_1 \cdot \left( \mu_2 \cdot \overline{I}_{uc} + \frac{1}{L} \cdot \overline{U}_1 \right)$$

$$I_{lp} - \mu_1 \cdot C \cdot U_{cc} = e^{\mu_2 \cdot T} \cdot \left(I_{li} - \mu_1 \cdot C \cdot U_{ci}\right) + a_2 \cdot \left(\mu_1 \cdot \bar{I}_{uc} + \frac{1}{L} \cdot \overline{U}_l\right)$$

où :

- R et L sont les valeurs, respectivement, de la résistance et de l'inductance du filtre RLC raccordées en série entre les premiers points d'entrée et de sortie,
- C est la capacité du condensateur raccordé entre les premier et second points de sortie,
- $\mu_1$ et $\mu_2$ sont les valeurs propres d'une matrice d'évolution définies par la relation suivante :

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ et $a_2$ sont les valeurs définies par les relations suivantes :

$$a_1 = \frac{e^{\mu_1 \cdot T} - 1}{\mu_1}$$

$$a_2 = \frac{e^{\mu_2 \cdot T} - 1}{\mu_2}$$

**5.** Procédé selon l'une quelconque des revendications précédentes, dans lequel la consigne de tension $U_{cc}$ est construite à partir de la tension de ligne $U_l$ de manière à ce que son spectre de puissance ne présente aucun harmonique au-delà de la fréquence 0,9/Tf.

**6.** Procédé de régulation d'un courant de ligne $I_l$ traversant une inductance L d'un filtre RLC passe-bas de période propre $T_f$, ce filtre comportant :

- deux points (34, 36) d'entrée électriquement raccordés respectivement aux conducteurs (26, 28) d'un bus DC d'un véhicule électrique alimenté par une caténaire, et
- des premier et second points (38, 40) de sortie, le premier point de sortie étant électriquement raccordé à un convertisseur électrique commandable (20) pour faire varier le couple d'un moteur électrique (16) de traction du véhicule électrique, la constante de temps statorique $\tau$ de ce moteur électrique (16) étant strictement inférieure à la période propre $T_f$,

ce procédé comportant :

- la mesure (112) ou l'estimation de l'intensité $I_{li}$ du courant de ligne $I_l$ à un instant $t_i$, d'une tension $U_{ci}$ entre les points (38, 40) de sortie du filtre à l'instant $t_i$ et d'une tension de ligne $U_l$ entre les points (34, 36) d'entrée du filtre,

**caractérisé en ce que** ce procédé est un procédé de régulation à réponse pile comportant :

- le calcul (122) d'une consigne $\overline{I}_{uc}$ pour l'intensité moyenne $\overline{I}_u$ d'un courant continu $I_u$ traversant le premier point (38) de sortie du filtre entre l'instant $t_i$ et un instant $t_{i+1}$, cette consigne $\overline{I}_{uc}$ étant établie à partir des équations d'états discrétisées du filtre de manière à ce que l'intensité du courant de ligne $I_l$ soit égale à une consigne de courant de ligne $I_{lc}$ prédéterminée, à l'instant $t_{i+1}$, ces équations d'états discrétisées reliant entre elles les intensités $I_{li}$, $I_{l,i+1}$ du courant de ligne $I_l$, respectivement, aux instants $t_i$ et $t_{i+1}$, les tensions $U_{ci}$ et $U_{c,i+1}$ entre les points (38, 40) de sortie du filtre, respectivement, aux instants $t_i$ et $t_{i+1}$, la tension moyenne $\overline{U}_1$, de la ligne entre les instants $t_i$ et $t_{i+1}$ et l'intensité moyenne $\overline{I}_u$ , et

- la commande (130) du convertisseur électrique (20) pour produire un courant $I_u$ traversant le point (38) de sortie dont l'intensité moyenne $\overline{I}_u$ entre les instants $t_i$ et $t_{i+1}$ est égale à la consigne $\overline{I}_{uc}$ , l'intervalle T de temps entre les instants $t_i$ et $t_{i+1}$ étant strictement inférieur à $5\tau$.

**7.** Procédé selon la revendication 6, dans lequel la consigne de courant de ligne $I_{lc}$ est choisie systématiquement inférieure ou égale à une limite $I_{lmax}$, la limite $I_{lmax}$ correspondant à l'intensité du courant de ligne $I_l$ à partir de laquelle un disjoncteur d'une sous-station d'alimentation de la caténaire ou du véhicule électrique est déclenché.

**8.** Procédé selon l'une quelconque des revendications 6 ou 7, dans lequel la consigne de courant de ligne $I_{lc}$ est choisie systématiquement supérieure ou égale à une limite $I_{lmin}$, la limite $I_{lmin}$ correspondant à l'intensité du courant de ligne en deçà de laquelle l'inductance L du filtre est déssaturée.

**9.** Procédé selon l'une quelconque des revendications 6 à 8, dans lequel le procédé comporte :

- la construction (116) d'une estimation $U_{cp}$ de la tension $U_c$ qui sera atteinte entre les points (38, 40) de sortie du filtre à l'instant $t_{i+1}$ si l'intensité du courant de ligne $I_l$ est égale à la consigne de courant de ligne $I_{lc}$ à l'instant $t_{i+1}$,
- la comparaison (118) de l'estimation de tension $U_{cp}$ à au moins une limite prédéterminée de tension $U_{cm}$,
- uniquement si la limite prédéterminée de tension $U_{cm}$ est franchie, la modification (120) de la consigne de courant de ligne $I_{lc}$ de manière à obtenir une consigne temporaire de courant de ligne $I_{lcm}$ qui corresponde à une estimation de tension $U_{cp}$ qui ne franchit pas la limite prédéterminée de tension $U_{cm}$, et l'utilisation (130) de la consigne temporaire de courant de ligne $I_{lcm}$ en lieu et place de la consigne de courant de ligne $I_{lc}$ lors de la commande du convertisseur uniquement pendant l'intervalle T en cours, et
- si la limite prédéterminée de tension $U_{cm}$ n'est pas franchie, l'utilisation de la consigne de courant de ligne $I_{lc}$ lors du calcul de la consigne de courant $\overline{I}_{uc}$ pour l'intervalle T en cours.

**10.** Procédé selon l'une quelconque des revendications 6 à 9, dans lequel la consigne de courant $\overline{I}_{uc}$ est une solution du système d'équations suivant :

$$I_{lc} - \mu_2 \cdot C \cdot U_{cp} = e^{\mu_1 \cdot T} \cdot \left(I_{li} - \mu_2 \cdot C \cdot U_{ci}\right) + a_1 \cdot \left(\mu_2 \cdot \overline{I}_{uc} + \frac{1}{L} \cdot \overline{U}_1\right)$$

$$I_{lc} - \mu_1 \cdot C \cdot U_{cp} = e^{\mu_2 \cdot T} \cdot \left(I_{li} - \mu_1 \cdot C \cdot U_{ci}\right) + a_2 \cdot \left(\mu_1 \cdot \overline{I}_{uc} + \frac{1}{L} \cdot \overline{U}_1\right)$$

OÙ :

- R et L sont les valeurs, respectivement, de la résistance et de l'inductance du filtre RLC raccordées en série entre les premiers points d'entrée et de sortie,
- C est la capacité du condensateur raccordé entre les premier et second points de sortie,
- $\mu_1$ et $\mu_2$ sont les valeurs propres d'une matrice d'évolution définies par la relation suivante :

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ et $a_2$ sont les valeurs définies par les relations suivantes :

$$a_1 = \frac{e^{\mu_1 \cdot T} - 1}{\mu_1}$$

$$a_2 = \frac{e^{\mu_2 \cdot T} - 1}{\mu_2}$$

**11.** Procédé selon l'une quelconque des revendications 1 à 10, dans lequel le procédé comporte :

- une première phase (140) de régulation de la seule tension $U_c$ entre les premier et second points de sortie du filtre conformément à l'une quelconque des revendications 1 à 5,
- une seconde phase (142) de régulation de la seule intensité du courant de ligne $I_l$ conformément à l'une quelconque des revendications 6 à 10,
- le passage de la première phase (140) vers la seconde phase (142) dès que l'intensité du courant de ligne $I_l$ franchit une limite $I_{lm}$ et le passage de la seconde phase vers la première phase dès que l'intensité du courant de ligne $I_l$ refranchit la même ou une autre limite en sens inverse.

**12.** Procédé selon l'une quelconque des revendications précédentes, dans lequel le procédé comporte la commande d'un rhéostat pour produire en combinaison avec la commande du convertisseur, le courant $I_u$ traversant la première borne de sortie du filtre dont l'intensité moyenne $\bar{I}_u$ entre les instants $t_i$ et $t_{i+1}$ est égale à la consigne de courant $\bar{I}_{uc}$.

**13.** Procédé selon l'une quelconque des revendications précédentes, dans lequel l'intervalle T est inférieur ou égal à $\tau/5$.

**14.** Support (52) d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

**15.** Véhicule électrique comportant :

- un bus DC formé de deux conducteurs (26, 28),
- au moins un moteur (16) de traction du véhicule électrique ayant une constante de temps statorique $\tau$,
- un convertisseur électrique commandable (20) propre à faire varier le couple du moteur de traction,
- un filtre (30) passe-bas RLC comportant deux points (34, 36) d'entrée électriquement raccordés, respectivement, aux deux conducteurs (26, 28) du bus DC et des premier et second points (38, 40) de sortie électriquement raccordés au convertisseur électrique (20),
- des capteurs (60, 62, 64) ou des estimateurs propres à mesurer ou à estimer l'intensité $I_{li}$ d'un courant de ligne $I_l$ traversant l'inductance (L) du filtre à l'instant $t_i$, une tension $U_{ci}$ entre les points (38, 40) de sortie du filtre à l'instant $t_i$; une tension de ligne $U_l$ entre les points (34, 36) d'entrée du filtre,

**caractérisé en ce que** le véhicule comporte :

- un calculateur (54) d'une consigne de courant $\bar{I}_{uc}$ pour l'intensité moyenne $\bar{I}_u$ d'un courant continu $\bar{I}_u$ traversant le premier point (38) de sortie entre l'instant $t_i$ et un instant $t_{i+1}$, cette consigne de courant $\bar{I}_{uc}$ étant établie à partir des équations d'états discrétisées du filtre de manière à ce que la tension $U_c$ soit égale à une consigne prédéterminée de tension $U_{cc}$ à l'instant $t_{i+1}$, ces équations d'états discrétisées reliant entre elles les intensités $I_{li}$, $I_{l,i+1}$ du courant $I_l$ de ligne respectivement aux instants $t_i$ et $t_{i+1}$, les tensions $U_{ci}$ et $U_{c,i+1}$ entre les points (38, 40) de sortie du filtre respectivement aux instants $t_i$ et $t_{i+1}$, la tension moyenne de ligne $\overline{U}_1$ entre les instants $t_i$ et $t_{i+1}$ et l'intensité moyenne $\bar{I}_u$,

- une unité (56) de commande du convertisseur électrique pour produire un courant $I_u$ traversant le point (38) de sortie du filtre dont l'intensité moyenne $\bar{I}_u$ entre les instants $t_i$ et $t_{i+1}$ est égale à la consigne $\bar{I}_{uc}$, l'intervalle T de temps entre les instants $t_i$ et $t_{i+1}$ étant strictement inférieur à $5\tau$.

**16.** Véhicule électrique comportant :

- un bus DC formé de deux conducteurs (26, 28),
- au moins un moteur (16) de traction du véhicule électrique ayant une constante de temps statorique $\tau$,
- un convertisseur électrique commandable (20) propre à faire varier le couple du moteur de traction,
- un filtre (30) passe-bas RLC comportant deux points (34, 36) d'entrée électriquement raccordés, respectivement, aux deux conducteurs (26, 28) du bus DC et des premier et second points (38, 40) de sortie électriquement raccordés au convertisseur électrique (20),
- des capteurs (60, 62, 64) ou des estimateurs propres à mesurer ou à estimer l'intensité $I_{li}$ d'un courant de ligne $I_l$ traversant l'inductance (L) du filtre à l'instant $t_i$, une tension $U_{ci}$ entre les points (38, 40) de sortie du filtre à l'instant $t_i$, une tension $U_l$ entre les points (34, 36) d'entrée du filtre,

**caractérisé en ce que** le véhicule comporte :

- un calculateur (54) d'une consigne de courant $\bar{I}_{uc}$ pour l'intensité moyenne $\bar{I}_u$ d'un courant continu $I_u$ traversant le premier point (38) de sortie du filtre entre l'instant $t_i$ et un instant $t_{i+1}$, cette consigne de courant $\bar{I}_{uc}$ étant établie à partir des équations d'états discrétisées du filtre de manière à ce que l'intensité du courant de ligne $I_l$ soit égale à une consigne de courant de ligne $I_{lc}$ prédéterminée à l'instant $t_{i+1}$, ces équations d'états discrétisées reliant entre elles les intensités $h_{li}$, $I_{l,i+1}$ du courant de ligne $I_l$, respectivement, aux instants $t_i$ et $t_{i+1}$, les tensions $U_{ci}$ et $U_{c,i+1}$ entre les points (38, 40) de sortie du filtre, respectivement, aux instants $t_i$ et $t_{i+1}$, la tension moyenne $\overline{U}_1$, de la ligne entre les instants $t_i$ et $t_{i+1}$ et l'intensité moyenne $\bar{I}_u$, et
- une unité (56) de commande du convertisseur électrique (20) pour produire un courant $I_u$ traversant le point (38) de sortie du filtre dont l'intensité moyenne $\bar{I}_u$ entre les instants $t_i$ et $t_{i+1}$ est égale à la consigne de courant $\bar{I}_{uc}$, l'intervalle T de temps entre les instants $t_i$ et $t_{i+1}$ étant strictement inférieur à $5_\tau$.

**Claims**

**1.** Method for regulating a voltage $U_c$ between a first output point and a second output point (38, 40) of an RLC low-pass filter (30) with a characteristic period $T_f$, this RLC filter comprising two input points (34, 36) which are connected electrically respectively to conductors (26, 28) of a DC bus of an electric vehicle which is supplied by means of a catenary, the first and the second output points (38, 40) being connected electrically to a controllable electrical converter (20) allowing control of the torque exerted by an electric traction motor (16) of the electric vehicle, the stator time constant $\tau$ of this motor being strictly less than the characteristic period $T_f$, this method comprising measurement (82) or estimation of the intensity $I_{li}$ of a line current $I_i$ passing through the inductance (L) of the filter at an instant $t_i$, of the voltage $U_{ci}$ between the output points (38, 40) of the filter at the instant $t_i$, and of a line voltage $U_1$ between the input points (34, 36) of the filter, **characterised in that** this method is a regulation method with a dead-beat response comprising:

- calculation (92) of a reference variable $\overline{I}_{uc}$ for the mean intensity $\overline{I}_u$ of a continuous current $I_u$ passing through the first output point (38) of the filter between the instant $t_i$ and an instant $t_{i+1}$, this reference variable $\bar{I}_{uc}$ being established from discretised state equations of the filter such that the voltage $U_c$ is equal to a predetermined voltage reference variable $U_{cc}$ at the instant $t_{i+1}$, these discretised state equations connecting together the intensities $I_{li}$, $I_{1,i+1}$ of the line current h respectively at the instants $t_i$ and $t_{i+1}$, the voltages $U_{ci}$ and $U_{c,i+1}$ between the output points (38, 40) of the filter respectively at the instants $t_i$ and $t_{i+1}$, the mean voltage of the line $\overline{U}_i$ between the instants $t_i$ and $t_{i+1}$ and the mean intensity $\overline{I}_u$,
- control (100) of the electrical converter for producing a current $I_u$ passing through the output point (38) of the filter, the mean intensity $\overline{I}_u$ of which between the instants $t_i$ and $t_{i+1}$ is equal to the reference variable $\bar{I}_{uc}$, the time interval T between the instants $t_i$ and $t_{i+1}$ being strictly less than $5\tau$.

**2.** Method according to claim 1, in which the voltage reference variable $U_{cc}$ is chosen systematically less than or equal to a limit $U_{cmax}$, the limit $U_{cmax}$ corresponding to the maximum permissible voltage at the input of the electrical converter (20) or between the output points (38, 40) of the filter.

3. Method according to any of the preceding claims, in which the method comprises:

- construction (86) of an estimate $I_{lp}$ of the line current $I_l$ which will be reached if the voltage $U_c$ is equal to the voltage reference variable $U_{cc}$ at the instant $t_{i+1}$,
- comparison (88) of the estimate $I_{lp}$ to at least one predetermined limit $I_{lm}$,
- only if the predetermined limit $I_{lm}$ is exceeded, modification (90) of the voltage reference variable $U_{cc}$ so as to obtain a temporary voltage reference variable $U_{ccm}$ which corresponds to an estimate $I_{lp}$ which does not exceed the predetermined limit $I_{lm}$, and use of the temporary voltage reference variable $U_{ccm}$ in place of the voltage reference variable $U_{cc}$ during calculation of the reference variable $\bar{I}_{uc}$ only for the present interval T, and
- if the predetermined limit $I_{lm}$ is not exceeded, use of the voltage reference variable $U_{cc}$ for calculation of the reference variable $\bar{I}_{uc}$ for the present interval T.

4. Method according to any of the preceding claims, in which the reference variable $\bar{I}_{uc}$ is a solution of the following system of equations:

$$I_{lp} - \mu_2 \cdot C \cdot U_{cc} = e^{\mu_1 \cdot T} \cdot \left( I_{li} - \mu_2 \cdot C \cdot U_{ci} \right) + a_1 \cdot \left( \mu_2 \cdot \bar{I}_{uc} + \frac{1}{L} \cdot \overline{U}_l \right)$$

$$I_{lp} - \mu_1 \cdot C \cdot U_{cc} = e^{\mu_2 \cdot T} \cdot \left( I_{li} - \mu_1 \cdot C \cdot U_{ci} \right) + a_2 \cdot \left( \mu_1 \cdot \bar{I}_{uc} + \frac{1}{L} \cdot \overline{U}_l \right)$$

where:

- R and L are the values respectively of the resistance and of the inductance of the RLC filter connected in series between the input and output points,
- C is the capacitance of the condenser connected between the first and second output points,
- $\mu 1$ and $\mu 2$ are the characteristic values of a development matrix defined by the following function:

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ and $a_2$ are the values defined by the following functions:

$$a_1 = \frac{e^{\mu_1 \cdot T} - 1}{\mu_1}$$

$$a_2 = \frac{e^{\mu_2 \cdot T} - 1}{\mu_2}$$

5. Method according to any of the preceding claims, in which the voltage reference variable $U_{cc}$ is constructed from the line voltage $U_1$ such that its power spectrum exhibits no harmonic beyond the frequency 0.9/Tf.

6. Method for regulating a line current $I_l$ passing through an inductance L of an RLC low-pass filter with a characteristic period $T_f$, this filter comprising:

- two input points (34, 36) which are connected electrically respectively to conductors (26, 28) of a DC bus of an electric vehicle which is supplied by means of a catenary, and
- first and the second output points (38, 40), the first output point being connected electrically to a controllable electrical converter (20) in order to vary the torque of an electric traction motor (16) of the electric vehicle, the stator time constant $\tau$ of this electric motor (16) being strictly less than the characteristic period $T_f$,

this method comprising:

- measurement (112) or estimation of the intensity $I_{li}$ of the line current $I_l$ at an instant $t_i$, of a voltage $U_{ci}$ between the output points (38, 40) of the filter at the instant $t_i$, and of a line voltage $U_l$ between the input points (34, 36) of the filter,

**characterised in that** this method is a regulation method with a dead-beat response comprising:

- calculation (122) of a reference variable $\bar{I}_{uc}$ for the mean intensity $\bar{I}_u$ of a continuous current $I_u$ passing through the first output point (38) of the filter between the instant $t_i$ and an instant $t_{i+1}$, this reference variable $\bar{I}_{uc}$ being established from discretised state equations of the filter such that the intensity of the line current $I_l$ is equal to a predetermined line current $I_{lc}$ at the instant $t_{i+1}$, these discretised state equations connecting together the intensities $I_{li}$, $I_{l,i+1}$ of the line current reference variable $I_l$ respectively at the instants $t_i$ and $t_{i+1}$, the voltages $U_{ci}$ and $U_{c,i+1}$ between the output points (38, 40) of the filter respectively at the instants $t_i$ and $t_{i+1}$, the mean voltage $\bar{U}_l$ of the line between the instants $t_i$ and $t_{i+1}$ and the mean intensity $\bar{I}_u$, and
- control (130) of the electrical converter (20) for producing a current $I_u$ passing through the output point (38), the mean intensity $\bar{I}_u$ of which between the instants $t_i$ and $t_{i+1}$ is equal to the reference variable $\bar{I}_{uc}$, the time interval T between the instants $t_i$ and $t_{i+1}$ being strictly less than $5\tau$.

7.  Method according to claim 6, in which the line current reference variable $I_{lc}$ is chosen systematically less than or equal to a limit $I_{lmax}$, the limit $I_{lmax}$ corresponding to the intensity of the line current $I_l$ from which a circuit breaker of a supply sub-station of the catenary or of the electric vehicle is tripped.

8.  Method according to any of the claims 6 or 7, in which the line current reference variable $I_{lc}$ is chosen systematically greater than or equal to a limit $I_{lmin}$, the limit $I_{lmin}$ corresponding to the intensity of the line current $I_l$ on this side of which the inductance L of the filter is desaturated.

9.  Method according to any of the claims 6 to 8, in which the method comprises:

- construction (116) of an estimate $U_{cp}$ of the voltage $U_c$ which will be reached between the output points (38, 40) of the filter at the instant $t_{i+1}$ if the intensity of the line current his equal to the line current reference variable $I_{lc}$ at the instant $t_{i+1}$,
- comparison (118) of the voltage estimate $U_{cp}$ at at least one predetermined voltage limit $U_{cm}$,
- only if the predetermined voltage limit $U_{cm}$ is exceeded, modification (120) of the line current reference variable $I_{lc}$ so as to obtain a temporary line current reference variable $I_{lcm}$ which corresponds to a voltage estimate $U_{cp}$ which does not exceed the predetermined voltage limit $U_{cm}$, and use (130) of the temporary line current reference variable $I_{lcm}$ in place of the line current reference variable $I_{lc}$ during control of the converter only during the present interval T, and
- if the predetermined voltage limit $U_{cm}$ is not exceeded, use of the line current reference variable $I_{lc}$ during calculation of the current reference variable $\bar{I}_{uc}$ for the present interval T.

10. Method according to any of the claims 6 to 9, in which the current reference variable $\bar{I}_{uc}$ is a solution of the following system of equations:

$$I_{lc} - \mu_2 \cdot C \cdot U_{cp} = e^{\mu_1 \cdot T} \cdot \left( I_{li} - \mu_2 \cdot C \cdot U_{ci} \right) + a_1 \cdot \left( \mu_2 \cdot \bar{I}_{uc} + \frac{1}{L} \cdot \bar{U}_l \right)$$

$$I_{lc} - \mu_1 \cdot C \cdot U_{cp} = e^{\mu_2 \cdot T} \cdot \left( I_{li} - \mu_1 \cdot C \cdot U_{ci} \right) + a_2 \cdot \left( \mu_1 \cdot \bar{I}_{uc} + \frac{1}{L} \cdot \bar{U}_1 \right)$$

where:

- R and L are the values respectively of the resistance and of the inductance of the RLC filter connected in series between the first input and output points,
- C is the capacitance of the condenser connected between the first and second output points,
- $\mu_1$ and $\mu_2$ are characteristic values of a development matrix defined by the following function:

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ and $a_2$ are the values defined by the following functions:

$$a_1 = \frac{e^{\mu_1 \cdot T} - 1}{\mu_1}$$

$$a_2 = \frac{e^{\mu_2 \cdot T} - 1}{\mu_2}$$

**11.** Method according to any of the claims 1 to 10, in which the method comprises:

- a first regulation phase (14) of the single voltage Uc between the first and second output points of the filter according to any of the claims 1 to 5,
- a second regulation phase (142) of the single intensity of the line current $I_l$ according to any of the claims 6 to 10,
- passage from the first phase (140) to the second phase (142) as soon as the intensity of the line current $I_l$ exceeds a limit $I_{lm}$ and passage from the second phase to the first phase as soon as the intensity of the line current $I_l$ recrosses the same or another limit in the reverse direction.

**12.** Method according to any of the preceding claims, in which the method comprises control of a rheostat for producing in combination with control of the converter, the current $I_u$ passing through the first output terminal of the filter, the mean intensity $\bar{I}_u$ of which between the instants $t_i$ and $t_{i+1}$ is equal to the current reference value $\bar{I}_{uc}$.

**13.** Method according to any of the preceding claims, in which the interval T is less than or equal to $\tau/5$.

**14.** Medium (52) for data recording, **characterised in that** it comprises instructions for performing a method according to any of the preceding claims, when these instructions are performed by an electronic computer.

**15.** Electric vehicle comprising:

- a DC bus formed by two conductors (26, 28),
- at least one traction motor (16) of the electric vehicle having a stator time constant $\tau$,
- a controllable electrical converter (20) suitable for varying the torque of the traction motor,

- a low-pass RLC filter (30) comprising two input points (34, 36) which are connected electrically respectively to the two conductors (26, 28) of the DC bus and first and second output points (38, 40) which are connected electrically to the electrical converter (20),

- sensors (60, 62, 64) or estimators suitable for measuring or estimating the intensity $I_{li}$ of a line current $I_l$ passing through the inductance (L) of the filter at the instant $t_i$, a voltage $U_{ci}$ between the output points of the filter at the instant $t_i$, a line voltage $U_l$ between the input points (34, 36) of the filter,

**characterised in that** the vehicle comprises:

- a calculator (54) of a current reference variable $\bar{I}_{uc}$ for the mean intensity $\bar{I}_u$ of a continuous current $\bar{I}_u$ passing through the first output point (38) between the instant $t_i$ and an instant $t_{i+1}$, this current reference variable $\bar{I}_{uc}$ being established from discretised state equations of the filter such that the voltage $U_c$ is equal to a predetermined voltage reference variable $U_{cc}$ at the instant $t_{i+1}$, these discretised state equations connecting together the intensities $I_{li}$, $I_{l,i+1}$ of the line current $I_l$ respectively at the instants $t_i$ and $t_{i+1}$, the voltages $U_{ci}$ and $U_{c,i+1}$ between the output points (38, 40) of the filter respectively at the instants $t_i$ and $t_{i+1}$, the mean voltage of the line $\bar{U}_l$ between the instants $t_i$ and $t_{i+1}$ and the mean intensity $\bar{I}_u$,

- a control unit (56) of the electrical converter for producing a current $I_u$ passing through the output point (38) of the filter, the mean intensity $\bar{I}_u$ of which between the instants $t_i$ and $t_{i+1}$ is equal to the reference variable $\bar{I}_{uc}$, the time interval T between the instants $t_i$ and $t_{i+1}$ being strictly less than $5\tau$.

**16.** Electric vehicle comprising:

- a DC bus formed by two conductors (26, 28),
- at least one traction motor (16) of the electric vehicle having a stator time constant $\tau$,
- a controllable electrical converter (20) suitable for varying the torque of the traction motor,
- a low-pass RLC filter (30) comprising two input points (34, 36) which are connected electrically respectively to the two conductors (26, 28) of the DC bus and first and second output points (38, 40) which are connected electrically to the electrical converter (20),
- sensors (60, 62, 64) or estimators suitable for measuring or estimating the intensity $I_{li}$ of a line current $I_l$ passing through the inductance (L) of the filter at the instant $t_i$, a voltage $U_{ci}$ between the output points (38, 40) of the filter at the instant $t_i$, a voltage $U_l$ between the input points (34, 36) of the filter,

**characterised in that** the vehicle comprises:

- a calculator (54) of a current reference variable $\bar{I}_{uc}$ for the mean intensity $\bar{I}_u$ of a continuous current $I_u$ passing through the first output point (38) of the filter between the instant $t_i$ and an instant $t_{i+1}$, this current reference variable $\bar{I}_{uc}$ being established from discretised state equations of the filter such that the intensity of the line current $I_l$ is equal to a predetermined line current reference variable $I_{lc}$ at the instant $t_{i+1}$, these discretised state equations connecting together the intensities $I_{li}$, $I_{l,i+1}$ of the line current $I_l$ respectively at the instants $t_i$ and $t_{i+1}$, the voltages $U_{ci}$ and $U_{c,i+1}$ between the output points (38, 40) of the filter respectively at the instants $t_i$ and $t_{i+1}$, the mean line voltage $\bar{U}_l$ between the instants $t_i$ and $t_{i+1}$ and the mean intensity $\bar{I}_u$, and

- a control unit (56) of the electrical converter for producing a current $I_u$ passing through the output point (38) of the filter, the mean intensity $\bar{I}_u$ of which between the instants $t_i$ and $t_{i+1}$ is equal to the current reference variable $\bar{I}_{uc}$, the time interval T between the instants $t_i$ and $t_{i+1}$ being strictly less than $5\tau$.

**Patentansprüche**

**1.** Verfahren zum Regulieren einer Spannung $U_c$ zwischen einem ersten und einem zweiten Ausgang (38, 40) eines RLC-Tiefpassfilters (30) mit einer Eigenperiode $T_f$, wobei dieser RLC-Filter zwei Eingänge (34, 36) aufweist, die jeweils mit Leitern (26, 28) eines DC-Busses eines Elektrofahrzeugs elektrisch verbunden sind, das über eine Oberleitung gespeist wird, wobei der erste und der zweite Ausgang (38, 40) mit einem steuerbaren Stromwandler (20) elektrisch verbunden sind, mit dem das von einem elektrischen Antriebsmotor (16) des Elektrofahrzeugs erzeugte Drehmoment geregelt werden kann, wobei die statische Zeitkonstante $\tau$ dieses Motors strikt kleiner als die Eigenperiode $T_f$ ist,

wobei das Verfahren das Messen (82) oder Schätzen der Intensität $I_{li}$ eines Leitungsstroms $I_i$, der die Induktanz (L) des Filters zu einem Zeitpunkt $t_i$ durchquert, der Spannung $U_{ci}$ zwischen den Ausgängen (38, 40) des Filters zum Zeitpunkt $t_i$ und einer Leitungsspannung $U_l$ zwischen den Eingängen (34, 36) des Filters beinhaltet,

**dadurch gekennzeichnet, dass** das Verfahren ein Dead-Beat-Regelverfahren ist, das die folgenden Schritte beinhaltet:

- Berechnen (92) einer Einstellgröße $\bar{I}_{uc}$ für die mittlere Intensität $\bar{I}_u$ eines Gleichstroms $I_u$, der den ersten Ausgang (38) des Filters zwischen dem Zeitpunkt $t_i$ und einem Zeitpunkt $t_{i+1}$ durchquert, wobei dieser Einstellwert $\bar{I}_{uc}$ auf der Basis von diskretisierten Zustandsgleichungen des Filters auf eine solche Weise festgelegt wird, dass die Spannung $U_c$ gleich einem vorbestimmten Feststellwert der Spannung $U_{cc}$ zum Zeitpunkt $t_{i+1}$ ist, wobei diese diskretisierten Zustandsgleichungen die Intensitäten $I_{li}$, $I_{l,i+1}$ des Leitungsstroms $I_i$ jeweils zu den Zeitpunkten $t_i$ und $t_{i+1}$, die Spannungen $U_{ci}$ und $U_{c,i+1}$ zwischen den Ausgängen (38, 40) des Filters jeweils zu den Zeitpunkten $t_i$ und $t_{i+1}$, die mittlere Leitungsspannung $\overline{U}_i$ zwischen den Zeitpunkten $t_i$ und $t_{i+1}$ und die mittlere Intensität $\bar{I}_u$ miteinander verbinden,
- Steuern (100) des Stromwandlers, um einen Strom $I_u$ zu erzeugen, der den Ausgang (38) des Filters durchquert, dessen mittlere Intensität $\bar{I}_u$ zwischen den Zeitpunkten $t_i$ und $t_{i+1}$ gleich dem Einstellwert $\bar{I}_{uc}$ ist, wobei das Zeitintervall T zwischen den Zeitpunkten $t_i$ und $t_{i+1}$ strikt kleiner als $5\tau$ ist.

2.  Verfahren nach Anspruch 1, bei dem der Einstellwert der Spannung $U_{cc}$ systematisch gleich oder kleiner als ein Grenzwert $U_{cmax}$ gewählt wird, wobei der Grenzwert $U_{cmax}$ der maximalen Spannung entspricht, die am Eingang des Stromwandlers (20) oder zwischen den Ausgängen (38, 40) des Filters zulässig ist.

3.  Verfahren nach einem der vorherigen Ansprüche, das die folgenden Schritte beinhaltet:

- Gewinnen (86) eines Schätzwertes $I_{lp}$ des Leitungsstroms $I_l$, der erreicht wird, wenn die Spannung $U_c$ gleich dem Einstellwert der Spannung $U_{cc}$ zum Zeitpunkt $t_{i+1}$ ist,
- Vergleichen (88) des Schätzwertes $I_{lp}$ mit wenigstens einem vorbestimmten Grenzwert $I_{lm}$,
- Verändern (90) des Einstellwertes der Spannung $U_{cc}$ nur dann, wenn der vorbestimmte Grenzwert $I_{lm}$ überschritten wird, um einen temporären Einstellwert der Spannung $U_{ccm}$ zu erhalten, der einem Schätzwert $I_{lp}$ entspricht, der den vorbestimmten Grenzwert $I_{lm}$ nicht überschreitet, und Verwenden des temporären Einstellwertes der Spannung $U_{ccm}$ anstatt des Einstellwertes der Spannung $U_{cc}$ beim Berechnen des Einstellwertes $\bar{I}_{uc}$ nur für das laufende Intervall T, und
- Verwenden des Einstellwertes der Spannung $U_{cc}$ zum Berechnen des Einstellwertes $\bar{I}_{uc}$ für das laufende Intervall T, wenn der vorbestimmte Grenzwert $I_{lm}$ nicht überschritten wird.

4.  Verfahren nach einem der vorherigen Ansprüche, bei dem der Einstellwert $\bar{I}_{uc}$ eine Lösung des folgenden Gleichungssystems ist:

$$I_{lp} - \mu_2 \cdot C \cdot U_{cc} = e^{\mu_1 \cdot T} \cdot \left(I_{li} - \mu_2 \cdot C \cdot U_{ci}\right) + a_1 \cdot \left(\mu_2 \cdot \bar{I}_{uc} + \frac{1}{L} \cdot \overline{U}_l\right)$$

$$I_{lp} - \mu_1 \cdot C \cdot U_{cc} = e^{\mu_2 \cdot T} \cdot \left(I_{li} - \mu_1 \cdot C \cdot U_{ci}\right) + a_2 \cdot \left(\mu_1 \cdot \bar{I}_{uc} + \frac{1}{L} \cdot \overline{U}_l\right)$$

wobei:

- R und L jeweils Werte des Widerstands und der Induktanz des RLC-Filters sind, die in Serie zwischen dem ersten Eingang und dem ersten Ausgang geschaltet sind,
- C die Kapazität des Kondensators ist, der zwischen dem ersten und dem zweiten Ausgang geschaltet ist,
- $\mu_1$ und $\mu_2$ die Eigenwerte einer durch die folgende Beziehung definierten Evolutionsmatrix sind:

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ und $a_2$ durch die folgenden Beziehungen definierte Werte sind:

$$a_1 \cong \frac{e^{\mu_1 \cdot T} - 1}{\mu_1}$$

$$a_2 = \frac{e^{\mu_2 \cdot T} - 1}{\mu_2}$$

**5.** Verfahren nach einem der vorherigen Ansprüche, bei dem der Einstellwert der Spannung $U_{cc}$ auf der Basis der Leitungsspannung $U_i$ auf eine solche Weise gewählt wird, dass sein Leistungsspektrum keine Oberwelle jenseits der Frequenz 0,9/Tf enthält.

**6.** Verfahren zum Regulieren eines Leitungsstroms $I_l$, der eine Induktanz L eines RLC-Tiefpassfilters mit Eigenperiode $T_f$ durchquert, wobei dieser Filter Folgendes umfasst:

- zwei Eingänge (34, 36), die jeweils mit den Leitern (26, 28) eines DC-Busses eines Elektrofahrzeugs elektrisch verbunden sind, das über eine Oberleitung gespeist wird, und
- einen ersten und einen zweiten Ausgang (38, 40), wobei der erste Ausgang mit einem steuerbaren Stromwandler (20) elektrisch verbunden ist, um das Drehmoment eines elektrischen Antriebsmotors (16) des Elektrofahrzeugs zu variieren, wobei die statische Zeitkonstante $\tau$ dieses Elektromotors (16) strikt kleiner als die Eigenperiode $T_f$ ist,

wobei dieses Verfahren Folgendes beinhaltet:

Messen (112) oder Schätzen der Intensität $I_{li}$ des Leitungsstroms $I_i$ zu einem Zeitpunkt $t_i$, einer Spannung $U_{ci}$ zwischen den Ausgängen (38, 40) des Filters zum Zeitpunkt $t_i$ und einer Leitungsspannung $U_1$ zwischen den Eingängen (34, 36) des Filters,

**dadurch gekennzeichnet, dass** das Verfahren ein Dead-Beat-Regelverfahren ist, das die folgenden Schritte beinhaltet:

- Berechnen (122) einer Einstellgröße $\bar{I}_{uc}$ für die mittlere Intensität $\bar{I}_u$ eines Gleichstroms $I_u$, der den ersten Ausgang (38) des Filters zwischen dem Zeitpunkt $t_i$ und einem Zeitpunkt $t_{i+1}$ durchquert, wobei dieser Einstellwert $\bar{I}_{uc}$ auf der Basis von diskretisierten Zustandsgleichungen des Filters auf eine solche Weise festgelegt wird, dass die Intensität des Leitungsstroms $I_l$ gleich einem vorbestimmten Einstellwert des Leistungsstroms $I_{lc}$ zum Zeitpunkt $t_{i+1}$ ist, wobei diese diskretisierten Zustandsgleichungen die Intensitäten $I_{li}$, $I_{l,i+1}$ des Leitungsstroms $I_i$ jeweils zu den Zeitpunkten $t_i$ und $t_{i+1}$, die Spannungen $U_{ci}$ und $U_{c,i+1}$ zwischen den Ausgängen (38, 40) des Filters jeweils zu den Zeitpunkten $t_i$ und $t_{i+1}$, die mittlere Leitungsspannung $\overline{U}_i$ zwischen den Zeitpunkten $t_i$ und $t_{i+1}$ und die mittlere Intensität $\bar{I}_u$ miteinander verbinden, und
- Steuern (130) des Stromwandlers (20), um einen Strom $I_u$ zu erzeugen, der den Ausgang (38) durchquert, dessen mittlere Intensität $\bar{I}_u$ zwischen den Zeitpunkten $t_i$ und $t_{i+1}$ gleich dem Einstellwert $\bar{I}_{uc}$ ist, wobei das Zeitintervall T zwischen den Zeitpunkten $t_i$ und $t_{i+1}$ strikt kleiner als $5\tau$ ist.

**7.** Verfahren nach Anspruch 6, bei dem der Einstellwert des Leitungsstroms $I_{lc}$ systematisch gleich oder kleiner als ein Grenzwert $I_{lmax}$ gewählt wird, wobei der Grenzwert $I_{lmax}$ der Intensität des Leitungsstroms $I_l$ entspricht, auf dessen Basis ein Unterbrecher eine Versorgungsunterstation der Oberleitung oder des Elektrofahrzeugs ausgelöst wird.

**8.** Verfahren nach Anspruch 6 oder 7, bei dem der Einstellwert des Leitungsstroms $I_{lc}$ systematisch gleich oder größer als ein Grenzwert $I_{lmin}$ gewählt wird, wobei der Grenzwert $I_{lmin}$ der Intensität des Leitungsstroms entspricht, diesseits deren die Induktanz L des Filters entsättigt ist.

**9.** Verfahren nach einem der Ansprüche 6 bis 8, wobei das Verfahren die folgenden Schritte beinhaltet:

- Gewinnen (116) eines Schätzwertes $U_{cp}$ der Spannung $U_c$, die zwischen den Ausgängen (38, 40) des Filters zum Zeitpunkt $t_{i+1}$ erreicht wird, wenn die Intensität des Leitungsstroms $I_l$ gleich dem Einstellwert des Leitungsstroms $I_{lc}$ zum Zeitpunkt $t_{i+1}$ ist,

- Vergleichen (118) des Schätzwertes der Spannung $U_{cp}$ mit wenigstens einem vorbestimmten Grenzwert der Spannung $U_{cm}$,

- Verändern (120) des Einstellwertes des Leitungsstroms $I_{lc}$ nur dann, wenn der vorbestimmte Grenzwert der Spannung $U_{cm}$ überschritten wird, auf eine solche Weise, dass ein temporärer Einstellwert des Leitungsstroms $I_{lcm}$ erhalten wird, der einem Schätzwert der Spannung $U_{cp}$ entspricht, der den vorbestimmten Grenzwert der Spannung $U_{cm}$ nicht überschreitet, und Verwenden (130) des temporären Einstellwertes des Leitungsstroms $I_{lcm}$ anstelle des Einstellwertes des Leitungsstroms $I_{lc}$ während des Steuerns des Wandlers nur während des laufenden Intervalls T, und

- Verwenden, wenn der vorbestimmte Grenzwert der Spannung $U_{cm}$ nicht überschritten wird, des Einstellwertes des Leitungsstroms $I_{lc}$ beim Berechnen des Einstellwertes des Stroms $\bar{I}_{uc}$ für das laufende Intervall T.

**10.** Verfahren nach einem der Ansprüche 6 bis 9, bei dem der Einstellwert des Stroms $\bar{I}_{uc}$ eine Lösung des folgenden Gleichungssystems ist:

$$I_{lc} - \mu_2 \cdot C \cdot U_{cp} = e^{\mu_1 \cdot T} \cdot (I_{li} - \mu_2 \cdot C \cdot U_{ci}) + a_1 \cdot \left( \mu_2 \cdot \bar{I}_{uc} + \frac{1}{L} \cdot \overline{U}_l \right)$$

$$I_{lc} - \mu_1 \cdot C \cdot U_{cp} = e^{\mu_2 \cdot T} \cdot (I_{li} - \mu_1 \cdot C \cdot U_{ci}) + a_2 \cdot \left( \mu_1 \cdot \bar{I}_{uc} + \frac{1}{L} \cdot \overline{U}_l \right)$$

wobei:

- R und L jeweils die Werte des Widerstands und der Induktanz des RLC-Filters sind, die in Serie zwischen den ersten Ein- und Ausgängen geschaltet sind,

- C die Kapazität des Kondensators ist, der zwischen dem ersten und dem zweiten Ausgang geschaltet ist,

- $\mu_1$ und $\mu_2$ die Eigenwerte einer durch die folgende Beziehung definierte Evolutionsmatrix sind:

$$\mu_1 = \frac{-R \cdot C + \sqrt{R^2 \cdot C^2 - 4 \cdot L \cdot C}}{2 \cdot L \cdot C}$$

$$\mu_2 = \frac{-R \cdot C - \sqrt{R^2 \cdot C^2 - 4 \cdot L \cdot C}}{2 \cdot L \cdot C}$$

- $a_1$ und $a_2$ durch die folgenden Beziehungen definierte Werte sind:

$$a_1 = \frac{e^{\mu_1 \cdot T} - 1}{\mu_1}$$

$$a_2 = \frac{e^{\mu_2 \cdot T} - 1}{\mu_2}$$

**11.** Verfahren nach einem der Ansprüche 1 bis 10, wobei das Verfahren die folgenden Schritte beinhaltet:

- eine erste Regulierphase (140) der Schwellenspannung $U_c$ zwischen dem ersten und dem zweiten Ausgang des Filters entsprechend einem der Ansprüche 1 bis 5,

- eine zweite Regulierphase (142) des Intensitätsschwellenwertes des Leitungsstroms $I_l$ entsprechend einem der Ansprüche 6 bis 10,
- Übergang der ersten Phase (140) auf die zweite Phase (142), sobald die Intensität des Leitungsstroms $I_l$ einen Grenzwert $I_{lm}$ überschreitet, und Übergang der zweiten Phase auf die erste Phase, sobald die Intensität des Leitungsstroms $I_i$ denselben oder einen anderen Grenzwert in umgekehrter Richtung erneut überschreitet.

**12.** Verfahren nach einem der vorherigen Ansprüche, wobei das Verfahren das Steuern eines Rheostats beinhaltet, um in Kombination mit der Steuerung des Wandlers den Strom $I_u$ zu erzeugen, der den ersten Ausgangsanschluss des Filters durchquert, dessen mittlere Intensität $\bar{I}_u$ zwischen den Zeitpunkten $t_i$ und $t_{i+1}$ gleich dem Einstellwert des Stroms $\bar{I}_{uc}$ ist.

**13.** Verfahren nach einem der vorherigen Ansprüche, bei dem das Intervall T gleich oder kleiner als $\tau/5$ ist.

**14.** Informationsspeichermedium (52), **dadurch gekennzeichnet, dass** es Befehle zum Ausführen eines Verfahrens nach einem der vorherigen Ansprüche beinhaltet, wenn diese Befehle von einem elektronischen Rechner ausgeführt werden.

**15.** Elektrofahrzeug, das Folgendes umfasst:

- einen DC-Bus, der von zwei Leitern (26, 28) gebildet wird,
- wenigstens einen Antriebsmotor (16) des Elektrofahrzeugs mit einer statischen Zeitkonstante $\tau$,
- einen steuerbaren Stromwandler (20) zum Variieren des Drehmoments des Antriebsmotors,
- einen RLC-Tiefpassfilter (30) mit zwei Eingängen (34, 36), die jeweils mit zwei Leitern (26, 28) des DC-Busses elektrisch verbunden sind, sowie einem ersten und einem zweiten Ausgang (38, 40), die mit dem Stromwandler (20) elektrisch verbunden sind,
- Sensoren (60, 62, 64) oder Schätzglieder zum Messen oder Schätzen der Intensität $I_{li}$ eines Leitungsstroms $I_i$, der die Induktanz (L) des Filters zum Zeitpunkt $t_i$ durchquert, einer Spannung $U_{ci}$ zwischen den Ausgängen (38, 40) des Filters zum Zeitpunkt $t_i$, einer Leitungsspannung $U_l$ zwischen den Eingängen (34, 36) des Filters,

**dadurch gekennzeichnet, dass** das Fahrzeug Folgendes umfasst:

- einen Rechner (54) für einen Einstellwert des Stroms $\bar{I}_{uc}$ für die mittlere Intensität $\bar{I}_u$ eines Gleichstroms $I_u$, der den ersten Ausgang (38) zwischen dem Zeitpunkt $t_i$ und einem Zeitpunkt $t_{i+1}$ durchquert, wobei dieser Einstellwert des Stroms $\bar{I}_{uc}$ auf der Basis von diskretisierten Zustandsgleichungen des Filters auf eine solche Weise festgelegt wird, dass die Spannung $U_c$ gleich einem vorbestimmten Einstellwert der Spannung $U_{cc}$ zum Zeitpunkt $t_{i+1}$ ist, wobei diese diskretisierten Zustandsgleichungen die Intensitäten $I_{li}$, $I_{l,i+1}$ des Leitungsstroms $I_l$ jeweils zu den Zeitpunkten $t_i$ und $t_{i+1}$, die Spannungen $U_{ci}$ und $U_{c,i+1}$ zwischen den Ausgängen (38, 40) des Filters jeweils zu den Zeitpunkten $t_i$ und $t_{i+1}$, die mittlere Leitungsspannung $\overline{U}_i$ zwischen den Zeitpunkten $t_i$ und $t_{i+1}$ und die mittlere Intensität $\bar{I}_u$ miteinander verbinden,
- eine Einheit (56) zum Steuern des Stromwandlers, um einen Strom $I_u$ zu erzeugen, der den Ausgang (38) des Filters durchquert, dessen mittlere Intensität $\bar{I}_u$ zwischen den Zeitpunkten $t_i$ und $t_{i+1}$ gleich dem Einstellwert $\bar{I}_{uc}$ ist, wobei das Zeitintervall T zwischen den Zeitpunkten $t_i$ und $t_{i+1}$ strikt kleiner als $5\tau$ ist.

**16.** Elektrofahrzeug, das Folgendes umfasst:

- einen DC-Bus, der von zwei Leitern (26, 28) gebildet wird,
- wenigstens einen Antriebsmotor (16) des Elektrofahrzeugs mit einer statischen Zeitkonstante $\tau$,
- einen steuerbaren Stromwandler (20) zum Variieren des Drehmoments des Antriebsmotors,
- einen RLC-Tiefpassfilter (30) mit zwei Eingängen (34, 36), die jeweils mit den zwei Leitern (26, 28) des DC-Busses elektrisch verbunden sind, sowie einem ersten und einem zweiten Ausgang (38, 40), die mit dem Stromwandler (20) elektrisch verbunden sind,
- Sensoren (60, 62, 64) oder Schätzglieder zum Messen oder Schätzen der Intensität $I_{li}$ eines Leitungsstroms $I_i$, der die Induktanz (L) des Filters zum Zeitpunkt $t_i$ durchquert, einer Spannung $U_{ci}$ zwischen den Ausgängen (38, 40) des Filters zum Zeitpunkt $t_i$, einer Spannung $U_l$ zwischen den Eingängen (34, 36) des Filters,

**dadurch gekennzeichnet, dass** das Fahrzeug Folgendes umfasst:

- einen Rechner (54) für einen Einstellwert des Stroms $\bar{I}_{uc}$ für die mittlere Intensität $\bar{I}_u$ eines Gleichstroms $I_u$,

der den ersten Ausgang (38) des Filters zwischen dem Zeitpunkt $t_i$ und einem Zeitpunkt $t_{i+1}$ durchquert, wobei dieser Einstellwert des Stroms $\bar{I}_{uc}$ auf der Basis von diskretisierten Zustandsgleichungen des Filters auf eine solche Weise festgelegt wird, dass die Intensität des Leistungsstroms $I_l$ gleich einem vorbestimmten Einstellwert des Leistungsstroms $L_{lc}$ zum Zeitpunkt $t_{i+1}$ ist, wobei diese diskretisierten Zustandsgleichungen die Intensitäten $I_{li}$, $I_{l,i+1}$ des Leitungsstroms $I_l$ jeweils zu den Zeitpunkten $t_i$ und $t_{i+1}$, die Spannungen $U_{ci}$ und $U_{c,i+1}$ zwischen den Ausgängen (38, 40) des Filters jeweils zu den Zeitpunkten ti und $t_{i+1}$, die mittlere Leitungsspannung $\bar{U}_i$ zwischen den Zeitpunkten $t_i$ und $t_{i+1}$ und die mittlere Intensität $\bar{I}_u$ miteinander verbinden,
- eine Einheit (56) zum Steuern des Stromwandlers (20), um einen Strom $I_u$ zu erzeugen, der den Ausgang (38) des Filters durchquert, dessen mittlere Intensität $\bar{I}_u$ zwischen den Zeitpunkten $t_i$ und $t_{i+1}$ gleich dem Einstellwert $\bar{I}_{uc}$ ist, wobei das Zeitintervall T zwischen den Zeitpunkten $t_i$ und $t_{i+1}$ strikt kleiner als $5\tau$ ist.

Fig. 1

Fig. 2

Fig. 3

Fig. 4

Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 60059904 A

- JP 2005318683 A